# EUROPEAN PATENT APPLICATION

(11) **EP 4 708 833 A1**
(43) Date of publication of application: **11.03.2026**
(21) Application number: 24815868.5
(22) Date of filing: 30.05.2024
(51) Int. Cl.: H04M 1/72454, H04M 1/02, G06F 3/14, G06F 3/048

(54) **ELECTRONIC DEVICE, AND METHOD FOR CONTROLLING DISPLAY OF ELECTRONIC DEVICE**

(30) Priority: 31.05.2023 KR 20230070088; 26.07.2023 KR 20230097489
(71) Applicant: Samsung Electronics Co., Ltd., Suwon-si, Gyeonggi-do 16677 (KR)
(72) Inventor: KIM, Sooryuh, Suwon-si, Gyeonggi-do 16677 (KR); PARK, Jeongmin, Suwon-si, Gyeonggi-do 16677 (KR); KIM, Sanggeon, Suwon-si, Gyeonggi-do 16677 (KR); KIM, Heewoong, Suwon-si, Gyeonggi-do 16677 (KR); CHUNG, Miyeoung, Suwon-si, Gyeonggi-do 16677 (KR)
(74) Representative: Gulde & Partner
(86) International application number: PCT/KR2024/007370
(87) International publication number: WO 2024/248493

(57) **Abstract**

An electronic device of the present disclosure may include: a foldable housing including a first housing and a second housing coupled to each other to be foldable or unfoldable; a memory; a processor; at least one sensor; a flexible display disposed on at least a portion of a first surface of the foldable housing so as to be foldable or unfoldable; and a cover display disposed on at least a portion of a second surface of the first housing, wherein instructions stored in the memory, when executed by the processor, cause the electronic device to: determine a bending angle of the foldable housing by using at least one sensor; determine a stand state of the foldable housing by using the at least one sensor; identify a display on which visual information is to be displayed on the basis of the bending angle and the stand state; and control the display on the basis of the visual information.

## Description

### [Technical Field]

Embodiments of the disclosure relate to an electronic device and a method for controlling a display of the electronic device.

### [Background Art]

Electronic devices are becoming progressively slimmer, more rigid, and enhanced in design, while simultaneously being developed to differentiate functional elements thereof. Moving beyond uniform rectangular shapes, electronic devices are gradually evolving into diverse forms. Electronic devices can have a transformable structure that allows for portability while enabling the use of large-screen displays. The large-screen displays are being developed beyond flexible forms to fully foldable displays.

In a foldable electronic device equipped with a foldable display, a large-area display may be used in an unfolded state, and in a folded state, the overall volume of the electronic device may be reduced, thereby enhancing both usability and portability.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

An electronic device may include a free stop hinge and multiple housings. A user can bend the foldable housing of the electronic device at various angles and place the bent electronic device in various postures on the ground or floor for use.

An electronic device and a method for controlling a display of the electronic device according to various embodiments of the disclosure are intended to control the display to change visual information based on the bent angle and posture (or form) of the electronic device having the foldable housing.

An electronic device of the disclosure may include: a foldable housing including a first housing and a second housing coupled to be foldable or unfoldable with respect to each other; a memory; a processor; at least one sensor; a flexible display disposed on at least a portion of a first surface of the foldable housing to be foldable or unfoldable; and a cover display disposed on at least a portion of a second surface of the first housing. Instructions stored in the memory of the disclosure, when executed by the processor, may cause the electronic device to determine a bending angle of the foldable housing by using the at least one sensor, determine a stand state of the foldable housing by using the at least one sensor, identify a display on which visual information is to be displayed, based on the bending angle and the stand state, and control the display, based on the visual information.

A method for controlling a display of an electronic device including a foldable housing that is foldable or unfoldable, according to the disclosure, may include: determining a bending angle of the foldable housing by using at least one sensor; determining a stand state of the foldable housing by using the at least one sensor; identifying a display on which visual information is to be displayed, based on the bending angle and the stand state; and controlling the display based on the visual information.

The electronic device and the method for controlling a display of the electronic device, according to various embodiments of the disclosure, may provide various visual experiences to a user of the electronic device including a foldable housing.

### [Brief Description of Drawings]

With regard to the description of the drawings, the same or like reference signs may be used to designate the same or like elements.
FIG. 1 is a block diagram of an electronic device in a network environment according to various embodiments of the disclosure.
FIG. 2A illustrates the folded state of an electronic device according to an embodiment of the disclosure.
FIG. 2B illustrates the extended state of an electronic device according to an embodiment of the disclosure.
FIG. 2C illustrates the flex state of an electronic device according to an embodiment of the disclosure.
FIG. 3A illustrates the folded state of an electronic device according to an embodiment of the disclosure.
FIG. 3B illustrates the extended state of an electronic device according to an embodiment of the disclosure.
FIG. 3C illustrates the flex state of an electronic device according to an embodiment of the disclosure.
FIG. 4A illustrates a first stand state of the electronic device in FIGS. 2A, 2B, and 2C according to an embodiment of the disclosure.
FIG. 4B illustrates a second stand state of the electronic device in FIGS. 2A, 2B, and 2C according to an embodiment of the disclosure.
FIG. 5A illustrates a third stand state of the electronic device in FIGS. 3A, 3B, and 3C according to an embodiment of the disclosure.
FIG. 5B illustrates a fourth stand state of the electronic device in FIGS. 3A, 3B, and 3C according to an embodiment of the disclosure.
FIG. 6 is a flowchart illustrating a method for controlling a display of an electronic device according to an embodiment of the disclosure.
FIG. 7 illustrates a first inertial sensor and a second inertial sensor according to an embodiment of the disclosure.
FIG. 8A illustrates a display control area according to the bending angle and the stand state of the electronic device in FIGS. 2A, 2B, and 2C and/or the electronic device in FIGS. 3A, 3B, and 3C according to an embodiment of the disclosure.
FIG. 8B illustrates a display control area according to the bending angle and the stand state of the electronic device in FIGS. 2A, 2B, and 2C and/or the electronic device in FIGS. 3A, 3B, and 3C according to an embodiment of the disclosure.
FIG. 8C illustrates a display control area according to the bending angle and the stand state of the electronic device in FIGS. 2A, 2B, and 2C and/or the electronic device in FIGS. 3A, 3B, and 3C according to an embodiment of the disclosure.
FIG. 9A illustrates a display control area according to the bending angle and the stand state of the electronic device in FIGS. 2A, 2B, and 2C and/or the electronic device in FIGS. 3A, 3B, and 3C according to an embodiment of the disclosure.
FIG. 9B illustrates a display control area according to the bending angle and the stand state of the electronic device in FIGS. 2A, 2B, and 2C and/or the electronic device in FIGS. 3A, 3B, and 3C according to an embodiment of the disclosure.
FIG. 10 illustrates a display control area according to the bending angle and the stand state of the electronic device in FIGS. 2A, 2B, and 2C and/or the electronic device in FIGS. 3A, 3B, and 3C according to an embodiment of the disclosure.
FIG. 11 illustrates a display control area according to the bending angle and the stand state of the electronic device in FIGS. 2A, 2B, and 2C and/or the electronic device in FIGS. 3A, 3B, and 3C according to an embodiment of the disclosure.
FIG. 12A illustrates the display control operation of the electronic device in FIGS. 2A, 2B, and 2C according to an embodiment of the disclosure.
FIG. 12B illustrates the display control operation of the electronic device in FIGS. 2A, 2B, and 2C according to an embodiment of the disclosure.
FIG. 13 illustrates the display control operation of the electronic device in FIGS. 2A, 2B, and 2C according to an embodiment of the disclosure.
FIG. 14A illustrates the display control operation of the electronic device in FIGS. 2A, 2B, and 2C according to an embodiment of the disclosure.
FIG. 14B illustrates the display control operation of the electronic device in FIGS. 2A, 2B, and 2C according to an embodiment of the disclosure.
FIG. 15A illustrates the display control operation of the electronic device in FIGS. 2A, 2B, and 2C according to an embodiment of the disclosure.
FIG. 15B illustrates the display control operation of the electronic device in FIGS. 2A, 2B, and 2C according to an embodiment of the disclosure.
FIG. 15C illustrates the display control operation of the electronic device in FIGS. 2A, 2B, and 2C according to an embodiment of the disclosure.
FIG. 16A illustrates the display control operation of the electronic device in FIGS. 2A, 2B, and 2C according to an embodiment of the disclosure.
FIG. 16B illustrates the display control operation of the electronic device in FIGS. 2A, 2B, and 2C according to an embodiment of the disclosure.
FIG. 16C illustrates the display control operation of the electronic device in FIGS. 2A, 2B, and 2C according to an embodiment of the disclosure.
FIG. 17 illustrates the display control operation of the electronic device in FIGS. 2A, 2B, and 2C according to an embodiment of the disclosure.
FIG. 18A illustrates the display control operation of the electronic device in FIGS. 2A, 2B, and 2C according to an embodiment of the disclosure.
FIG. 18B illustrates the display control operation of the electronic device in FIGS. 2A, 2B, and 2C according to an embodiment of the disclosure.

### [Mode for the Invention]

Hereinafter, embodiments of the disclosure will be described in detail with reference to the accompanying drawings so that those skilled in the art to which the disclosure pertains can easily implement the disclosure. However, the disclosure may be implemented in various different forms and is not limited to embodiments set forth herein. With regard to the description of the drawings, the same or like reference signs may be used to designate the same or like elements. Also, in the drawings and the relevant descriptions, description of well-known functions and configurations may be omitted for the sake of clarity and brevity.

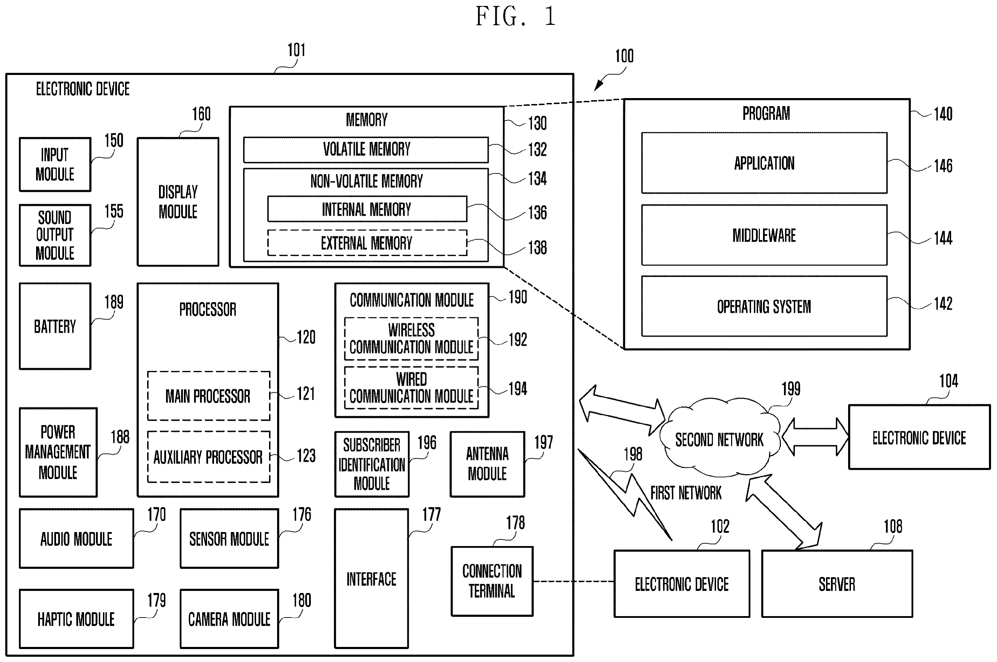

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

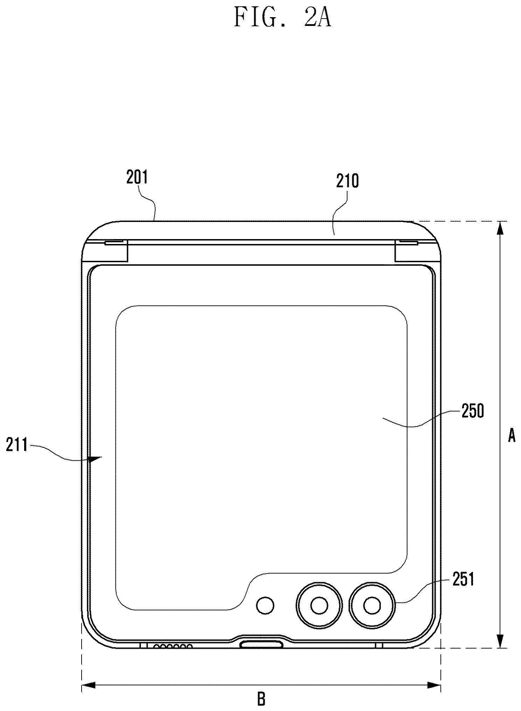

FIG. 2A illustrates the folded state of an electronic device 201 according to an embodiment of the disclosure.

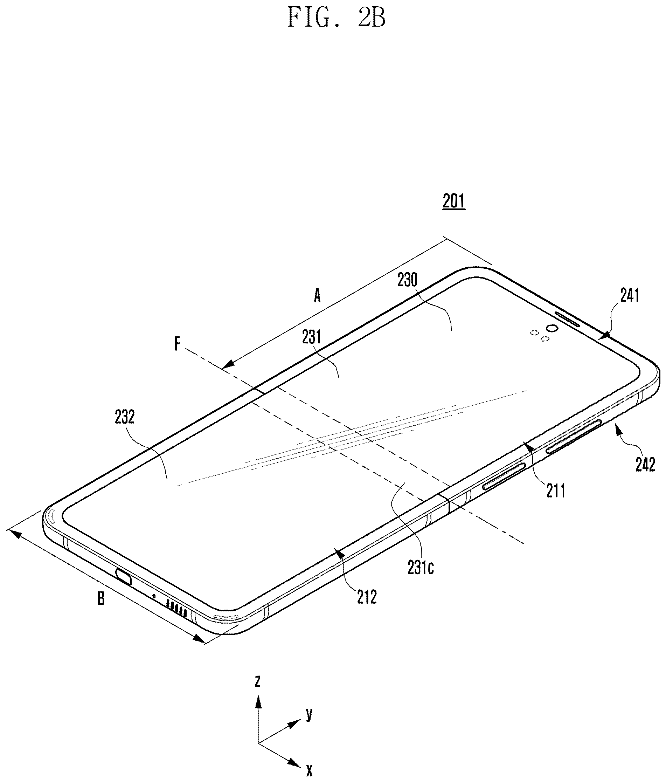

FIG. 2B illustrates the extended state of the electronic device 201 according to an embodiment of the disclosure.

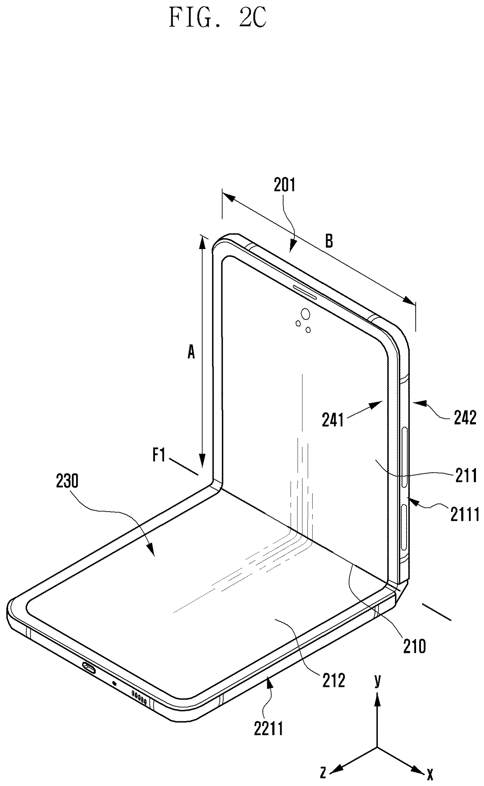

FIG. 2C illustrates the flex state of the electronic device 201 according to an embodiment of the disclosure.

The electronic device 201 in FIGS. 2A, 2B, and 2C may be identical to the electronic device 101 in FIG. 1. However, the disclosure is not limited thereto, and in the electronic device 201 in FIGS. 2A, 2B, and 2C, some components may be omitted or added compared to the electronic device 101 in FIG. 1.

Referring to FIGS. 2A, 2B, and 2C, the electronic device 201 may include a hinge 210, a first housing 211, and a second housing 212. A foldable housing of the electronic device 201 may include the hinge 210, the first housing 211, and the second housing 212.

In an embodiment, the hinge 210 may include one or more hinge assemblies. The hinge 210 may be a free stop hinge. The free stop hinge allows the foldable housing (e.g., the first housing 211 and the second housing 212) to be held at a position desired by a user.

In an embodiment, the electronic device 201 may further include one or more sensors capable of detecting the tilt of the hinge 210.

In an embodiment, the electronic device 201 may adjust the angle formed by the first housing 211 and the second housing 212 via the hinge 210.

In an embodiment, the hinge 210 may be disposed in an area where a flexible display 230 may be bent, and may support the flexible display 230 to maintain a predetermined angle while the flexible display 230 is bent.

In an embodiment, the first housing 211 and the second housing 212 may include at least one space. The flexible display 230 may be disposed in the at least one space included in the first housing 211 and the second housing 212.

In an embodiment, the flexible display 230 may be a flexible display and/or a foldable display. The flexible display 230 in FIGS. 2A, 2B, and 2C may be identical to the display 160 in FIG. 1.

In an embodiment, the hinge 210 may be configured such that the first housing 211 and the second housing 212 are folded relative to each other.

In an embodiment, a pair of housing structures 211 and 212 and the hinge 210 of the electronic device 201 are not limited to the form and coupling illustrated in FIGS. 2A, 2B, and 2C, and may be implemented by other shapes or combinations and/or coupling of components.

In an embodiment, the first housing 211 and the second housing 212 may include side members or frames 2111 and 2211 that surround the space between a front surface 241 and a rear surface 242. The flexible display 230 may be disposed on the front surface 241.

In an embodiment, a first frame 2111 may surround the side surface of the first housing 211, and a second frame 2211 may surround the side surface of the second housing 212. The first frame 2111 may be formed as at least a portion of the first housing 211, and the electronic device 201 may further include a cover covering at least a portion of the first frame 2111. The second frame 2211 may be formed as at least a portion of the second housing 212, and the electronic device 201 may further include a cover covering at least a portion of the second frame 2211. The covers may perform a decorative function for the first frame 2111 and/or the second frame 2211.

In an embodiment, at least a portion of at least one frame 2111 or 2211 may operate as an antenna for the electronic device 201. The at least one frame 2111 or 2211 may include at least a portion made of a conductive material (e.g., metal). The at least one frame 2111 or 2211 may operate as an antenna, under the control of a processor (e.g., the processor 120 in FIG. 1).

In an embodiment, the first housing 211 and the second housing 212 may be arranged on both sides of a folding axis (F1 axis) and may be folded or unfolded about the folding axis (F1 axis).

In an embodiment, the first housing 211 may support a first area 231 of the flexible display 230. The second housing 212 may support a second area 232 of the flexible display 230. The first housing 211 may support the first area 231 of the flexible display 230 on the front surface 241, and the first housing 211 may include a cover display or sub-display 250 and a camera 251 (e.g., the camera module 180) on the rear surface 242.

In an embodiment, the flexible display 230 disposed on the front surface 241 of the first housing 211 and the second housing 212 may be a main display and/or a first display, and the cover display 250 disposed in the first housing 211 on the rear surface 242 may be a sub-display and/or a second display.

In an embodiment, depending on the angle or distance between the first housing 211 and the second housing 212, the electronic device 201 may determine, under the control of a processor (e.g., the processor 120 in FIG. 1), whether the electronic device 201 is in a folded state, a flex state, and/or an extended state.

In an embodiment, the angle or distance between the first housing 211 and the second housing 212 may be detected based on one or more sensors included in the electronic device 201. The sensors for detecting the angle or distance between the first housing 211 and the second housing 212 may be tilt sensors, for example, an inertial sensor and/or an accelerometer.

In an embodiment, when the angle between the first housing 211 and the second housing 212 is a first angle (e.g., approximately 0 degrees), the electronic device 201, under the control of the processor 120, may determine that the electronic device 201 is in a folded state.

In an embodiment, when the angle between the first housing 211 and the second housing 212 is a second angle (e.g., approximately 180 degrees), the electronic device 201, under the control of the processor 120, may determine that the electronic device 201 is in an extended state.

In an embodiment, when the angle between the first housing 211 and the second housing 212 is within a specific angle range (e.g., a specific angle greater than approximately 0 degrees and less than approximately 180 degrees), the electronic device 201 may determine, under the control of the processor 120, that the electronic device 201 is in a flex state. The flex state may be a state in which the electronic device 201 is partially folded.

Referring to FIG. 2A, when the electronic device 201 is in a folded state, the flexible display 230 may not be exposed to the outside of the electronic device 201. When the electronic device 201 is in the folded state, the electronic device 201, under the control of the processor 120, may control power supplied to the flexible display 230 to place the flexible display 230 in a low-power state, a standby state, and/or an off state.

Referring to FIG. 2A, the camera 251 (e.g., the camera module 180) may include at least one camera. The camera 251 (e.g., the camera module 180) may include at least one of a time-of- flight (TOF) camera, a wide-angle camera, a telephoto camera, and/or a depth camera. The electronic device 201 may use the camera 251 to measure the distance and/or depth to an external object.

Referring to FIG. 2B, the electronic device 201 may have a first length (A) in a first axis direction (e.g., the vertical axis direction, the Y-axis direction) of the first housing 211 and the second housing 212, and a second length (B) in a second axis direction(e.g., the horizontal axis direction, the X-axis direction) with respect to the folding axis (F1 axis).

In an embodiment, when the electronic device 201 is in an extended state, the length of the frame in the first axis direction (e.g., the vertical axis direction, the Y-axis direction) of the first housing 211 and the second housing 212 may be longer than the length of the frame in the second axis direction (e.g., the horizontal axis direction, the X-axis direction).

Referring to FIG. 2C, when the electronic device 201 is in a flex state, the flexible display 230 is exposed outside, and at least a portion of the flexible display 230 may be bent.

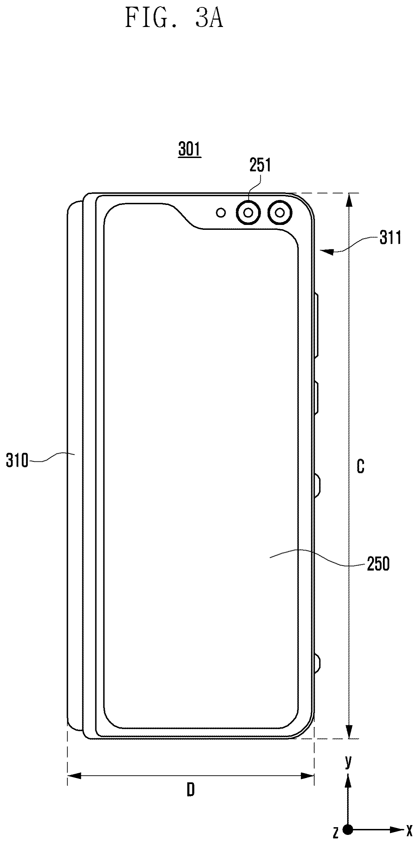

FIG. 3A illustrates the folded state of an electronic device 301 according to an embodiment of the disclosure.

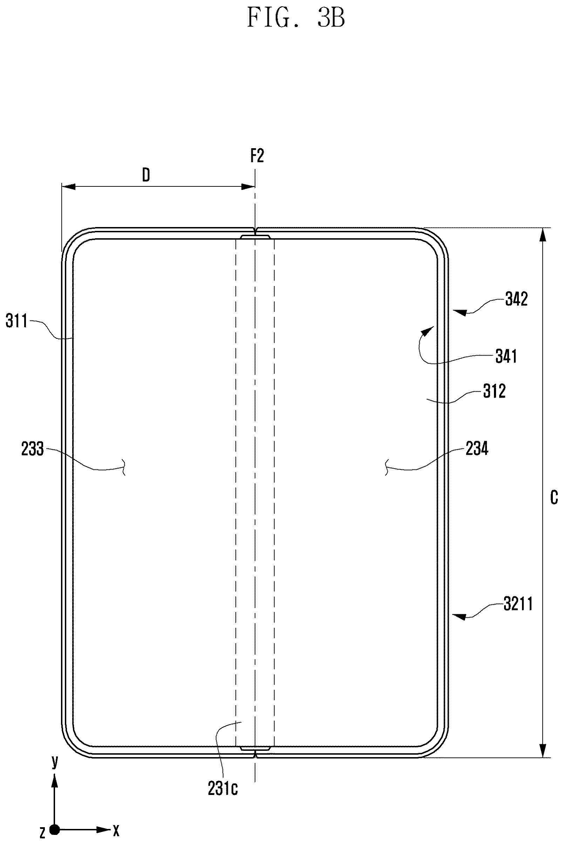

FIG. 3B illustrates the extended state of the electronic device 301 according to an embodiment of the disclosure.

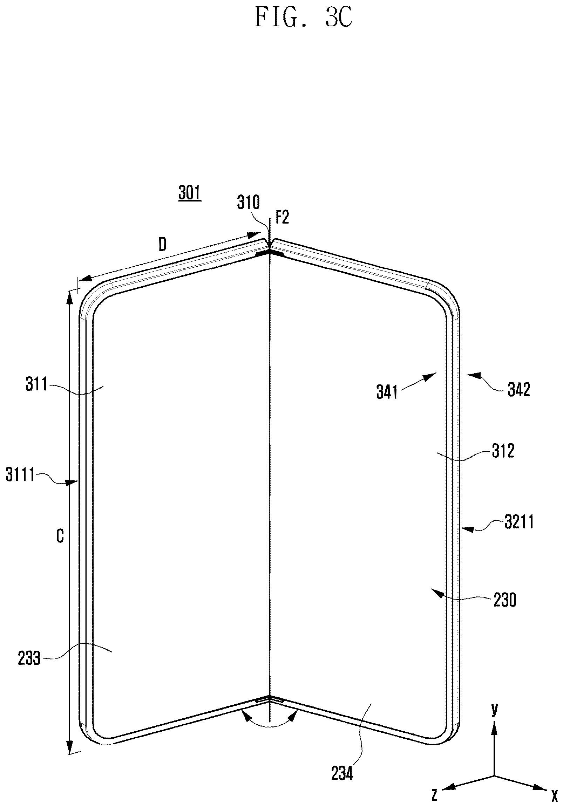

FIG. 3C illustrates the flex state of the electronic device 301 according to an embodiment of the disclosure.

The electronic device 201 in FIGS. 3A, 3B, and 3C may be identical to the electronic device 101 in FIG. 1. However, the disclosure is not limited thereto, and in the electronic device 201 in FIGS. 3A, 3B, and 3C, some components may be omitted or added compared to the electronic device 101 in FIG. 1.

Referring to FIGS. 3A and 3B, the electronic device 301 may include a hinge 310, a third housing 311, and a fourth housing 312. A foldable housing of the electronic device 301 may include the hinge 310, the third housing 311, and the fourth housing 312.

In an embodiment, the hinge 310 may include one or more hinge assemblies. The hinge 310 may be a free stop hinge. The free stop hinge allows the foldable housing (e.g., the third housing 311 and the fourth housing 312) to be held at a position desired by a user.

In an embodiment, the electronic device 301 may further include one or more sensors capable of detecting the tilt of the hinge 310.

In an embodiment, the electronic device 301 may adjust the angle formed by the third housing 311 and the fourth housing 312 via the hinge 310.

In an embodiment, the hinge 310 may be positioned in an area where a flexible display 230 may be bent, and may support the flexible display 230 to maintain a predetermined angle while the flexible display 230 is bent.

In an embodiment, the third housing 311 and the fourth housing 312 may include at least one space. The flexible display 230 may be disposed in at least one space included in the third housing 311 and the fourth housing 312.

In an embodiment, the flexible display 230 may be a flexible display and/or a foldable display. The flexible display 230 in FIGS. 3A, 3B, and 3C may be identical to the display 160 in FIG. 1.

In an embodiment, the hinge 310 may be configured such that the third housing 311 and the fourth housing 312 are fold relative to each other.

A pair of housing structures 311 and 312 and the hinge 310 of the electronic device 201 are not limited to the form and coupling illustrated in FIGS. 3A, 3B, and 3C, and may be implemented by other shapes or coupling and/or combinations of components.

In an embodiment, the third housing 311 and the fourth housing 312 may include side members or frames 3111 and 3211 that surround the space between a front surface 341 and a rear surface 342. The flexible display 230 may be disposed on the front surface 341.

In an embodiment, the third frame 3111 may surround the side surface of the third housing 311, and the fourth frame 3211 may surround the side surface of the fourth housing 312. The third frame 3111 may be formed as at least a portion of the third housing 311, and the electronic device 301 may further include a cover covering at least a portion of the third frame 3111. The fourth frame 3211 may be formed as at least a portion of the fourth housing 312, and the electronic device 301 may further include a cover covering at least a portion of the fourth frame 3211. The covers may perform a decorative function for the third frame 3111 and/or the fourth frame 3211.

In an embodiment, at least a portion of at least one frame 3111 or 3211 may operate as an antenna for the electronic device 201. The at least one frame 3111 or 3211 may comprise at least a portion made of a conductive material (e.g., metal). The at least one frame 3111 or 3211 may operate as an antenna under the control of a processor (e.g., the processor 120 in FIG. 1).

In an embodiment, the third housing 311 and the fourth housing 312 are arranged on both sides of a folding axis (F2 axis) and may be folded or unfolded about the folding axis (F2 axis).

In an embodiment, the third housing 311 may support a third area 233 of the flexible display 230. The fourth housing 312 may support a fourth region 234 of the flexible display 230. The third housing 311 may support the third area 233 of the flexible display 230 on the front surface 341, and the third housing 311 may include a cover display 250 or a sub-display 250 on the rear surface 342.

In an embodiment, the flexible display 230 disposed on the front surface 341 of the third housing 311 and the fourth housing 312 may be a main display and/or a first display, and the cover display 250 disposed on the rear surface 342 of the third housing 311 may be a sub-display and/or a second display.

In an embodiment, depending on the angle or distance between the third housing 311 and the fourth housing 312, the electronic device 301 may determine, under the control of a processor (e.g., the processor 120 in FIG. 1), whether the electronic device 301 is in a folded state, a flex state, and/or an extended state.

In an embodiment, the angle or distance between the third housing 311 and the fourth housing 312 may be detected based on one or more sensors included in the electronic device 301. The sensors for detecting the angle or distance between the third housing 311 and the fourth housing 312 may be tilt sensors, for example, an inertial sensor and/or an accelerometer.

In an embodiment, when the angle between the third housing 311 and the fourth housing 312 is a first angle (e.g., approximately 0 degrees), the electronic device 301, under the control of the processor 120, may determine that the electronic device 301 is in a folded state.

In an embodiment, when the angle between the third housing 311 and the fourth housing 312 is a second angle (e.g., approximately 180 degrees) or within a seventh angle range (e.g., from approximately 130 degrees to approximately 180 degrees), the electronic device 301, under the control of the processor 120, may determine that the electronic device 301 is in an extended state.

In an embodiment, when the angle between the third housing 311 and the fourth housing 312 is within a specific angle range (e.g., a specific angle greater than approximately 0 degrees and less than approximately 180 degrees), the electronic device 301, under the control of the processor 120, may determine that the electronic device 301 is in a flex state. The flex state may be a state in which the electronic device 301 is partially folded.

Referring to FIG. 3A, when the electronic device 301 is in a folded state, the flexible display 230 may not be exposed to the outside of the electronic device 301. When the electronic device 301 is in the folded state, the electronic device 301, under the control of the processor 120, may control power supplied to the flexible display 230 to place the flexible display 230 in a low-power state, a standby state, and/or an off state.

Referring to FIG. 3A, a camera 251 (e.g., the camera module 180) may include at least one camera. The camera 251 (e.g., the camera module 180) may include at least one of a time-of- flight (TOF) camera, a wide-angle camera, a telephoto camera, and/or a depth camera. The electronic device 201 may use the camera 251 to measure the distance and/or depth to an external object.

Referring to FIG. 3B, the electronic device 301 may have a third length (C) in a first axis direction (e.g., the vertical axis direction, the Y-axis direction) of the third housing 311 and the fourth housing 312, and a fourth length (D) in a second axis direction(e.g., the horizontal axis direction, the X-axis direction) with respect to the folding axis (F2 axis).

In an embodiment, when the electronic device 301 is in an extended state, the length of the frame in the second axis direction (e.g., the horizontal axis direction, the X-axis direction) of the third housing 311 and the fourth housing 312 may be longer than the length of the frame in the first axis direction (e.g., the vertical axis direction, the Y-axis direction). However, the disclosure is not limited thereto, and when the electronic device 301 is in the extended state, the length of the frame in the second axis direction (e.g., the horizontal axis direction, the X-axis direction) of the third housing 311 and the fourth housing 212 may be equal to the length of the frame in the first axis direction (e.g., the vertical axis direction, the Y-axis direction).

Referring to FIG. 3C, when the electronic device 201 is in a flex state, the flexible display 230 is exposed outside, and at least a portion of the flexible display 230 may be bent.

The electronic device 201 in FIGS. 2A, 2B, and 2C is a clamshell-type foldable electronic device, the folding axis of which is the horizontal axis (or the X-axis), while the electronic device 301 in FIGS. 3A, 3B, and 3C may be a foldable electronic device, the folding axis of which is the vertical axis (or the Y-axis).

The electronic device 201 in FIG. 2A, 2B, and 2C and the electronic device 301 in FIGS. 3A, 3B, and 3C may be in-folding-type foldable electronic devices in which, in a folded state, the flexible display 230 folds inward, and is protected by a pair of housings (e.g., the first housing 211 and the second housing 212, or the third housing 311 and the fourth housing 312).

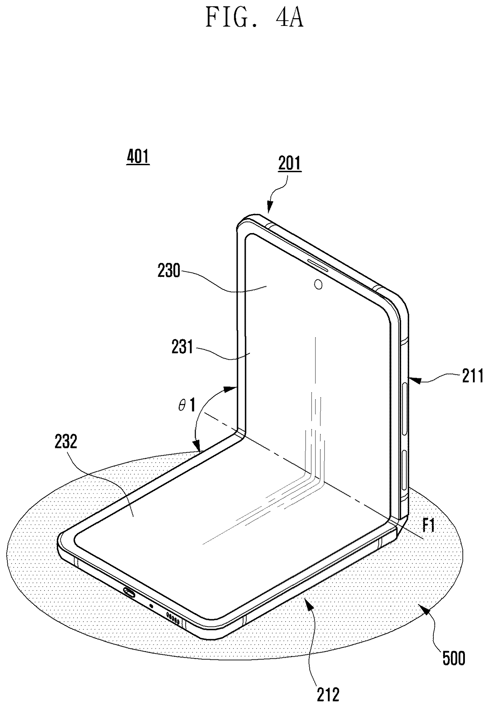

FIG. 4A illustrates a first stand state 401 of the electronic device 201 in FIGS. 2A, 2B, and 2C according to an embodiment of the disclosure.

In an embodiment, the first stand state 401 of the electronic device 201 may be a state in which the rear surface (e.g., the rear surface 242 in FIGS. 2B and 2C) of the first housing 211 or the rear surface 242 of the second housing 212 faces a ground 500 when the electronic device 201 is in a flex state.

In an embodiment, in the flex state, the angle between the first housing 211 and the second housing 212 of the electronic device 201 may be a first specific angle θ1.

In an embodiment, the first stand state 401 of the electronic device 201 may be a state in which when the electronic device 201 is in the flex state, the rear surface 242 of the first housing 211 or the rear surface 242 of the second housing 212 is aligned with the ground 500 within a predetermined angular range.

In an embodiment, the state in which the rear surface 242 of the first housing 211 or the rear surface 242 of the second housing 212 faces the ground 500 in the flex state of the electronic device 201 may include not only a state in which at least a portion of the rear surface 242 of the first housing 211 or the rear surface 242 of the second housing 212 is in contact with the ground 500, but also a state in which the at least portion is placed on a specific surface such as a palm or a desk. For example, the state in which the rear surface 242 of the first housing 211 or the rear surface 242 of the second housing 212 faces the ground 500 in the flex state of the electronic device 201 may be a state in which at least a portion of the rear surface 242 of the first housing 211 or the rear surface 242 of the second housing 212 is placed on a palm and positioned in the air.

For example, when the electronic device 201 is in a flex state, the rear surface 242 of the first housing 211 may face the ground 500, and the second housing structure 212 may stand in the air based on the first housing 211. However, the disclosure is not limited to thereto. The first stand state 401 of the electronic device 201 may be a state in which, when the electronic device 201 is in a flex state, the rear surface 242 of the second housing 212 faces the ground 500, and the first housing 211 stands in the air based on the second housing 212.

In an embodiment, the first stand state 401 of the electronic device 201 may be determined based on a signal detected by an inertial sensor, such as a gyro sensor or an accelerometer. For example, when the signal detected by an inertial sensor, such as a gyro sensor and/or an accelerometer, is determined to be a signal indicating that the axial movement angle of either the rear surface 242 of the first housing 211 or the rear surface 242 of the second housing 212 has moved or stopped within a predetermined angle, the electronic device 201 may determine that the rear surface 242 of any one housing structure among the rear surface 242 of the first housing 211 or the rear surface 242 of the second housing 212 faces the ground 500.

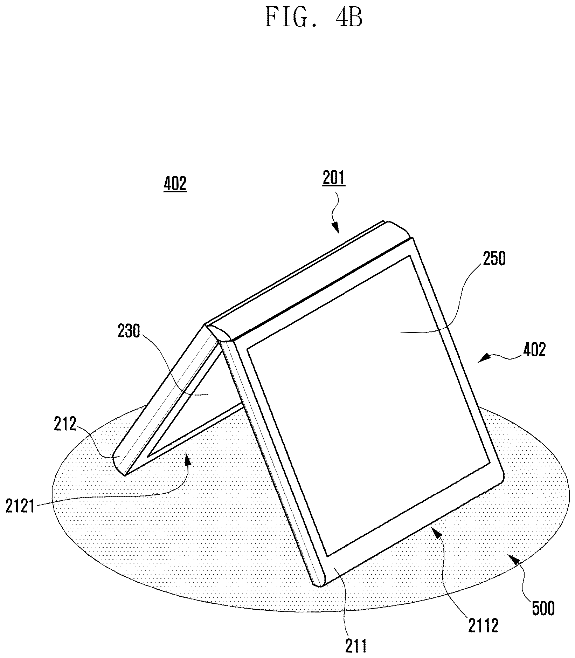

FIG. 4B illustrates a second stand state of the electronic device 201 in FIGS. 2A, 2B, and 2C according to an embodiment of the disclosure.

In an embodiment, a second stand state 402 of the electronic device 201 may be a state in which a first edge 2112 of the first housing 211 and/or a second edge 2121 of the second housing 212 faces the ground 500 when the electronic device 201 is in a flex state.

In an embodiment, the second stand state 402 of the electronic device 201 may be a state in which, in the flex state, the first edge 2112 of the first housing 211 and/or the second edge 2121 of the second housing 212 is aligned with the ground 500 within a predetermined angle range.

In an embodiment, the state in which the first edge 2112 of the first housing 211 or the second edge 2121 of the second housing 212 faces the ground 500 in the flex state of the electronic device may include not only a state in which the first edge 2112 of the first housing 211 or the second edge 2121 of the second housing 212 is in contact with the ground 500, but also a state in which the first edge 2112 of the first housing 211 or the second edge 2121 of the second housing 212 is placed on a specific surface such as a palm or a desk. For example, the state in which the first edge 2112 of the first housing 211 or the second edge 2121 of the second housing 212 of the electronic device 201 faces the ground 500 in the flex state of the electronic device 201 may include a state in which the first edge 2112 of the first housing 211 or the second edge 2121 of the second housing 212 of the electronic device 201 is placed on a palm and positioned in the air.

In an embodiment, the second stand state 402 of the electronic device 201 may be determined based on a signal detected by an inertial sensor, such as a gyro sensor or an accelerometer.

In an embodiment, the electronic device 201 in FIGS. 2A, 2B, 2C, 4A, and 4B may have a rectangular shape where the length in the transverse direction is shorter than the length in the longitudinal direction when viewed toward the flexible display 230. In this case, two edges located along the transverse direction of the electronic device 201 may be the first edge 2112 and the second edge 2121. The first edge 2112 may be the top edge the electronic device 201, and the second edge 2121 may be the bottom edge of the electronic device 210.

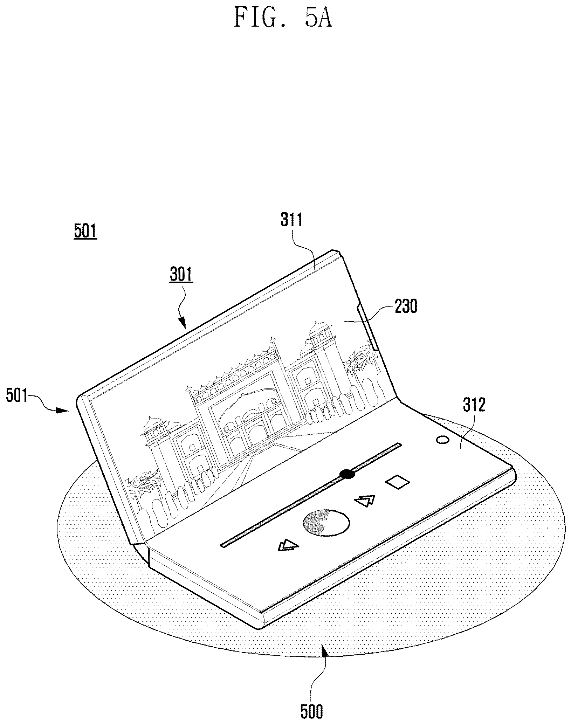

FIG. 5A illustrates a third stand state of the electronic device 301 in FIGS. 3A, 3B, and 3C according to an embodiment of the disclosure.

In an embodiment, a third stand state 501 of the electronic device 301 may be a state in which the rear surface (e.g., the rear surface 342 in FIGS. 3B and 3C) of the third housing 311 or the rear surface 342 of the fourth housing 312 faces the ground 500 when the electronic device 301 is in a flex state.

In an embodiment, the third stand state 501 of the electronic device 301 may be a state in which the rear surface 342 of the third housing 311 or the rear surface 342 of the fourth housing 312 is aligned with the ground 500 within a predetermined angle range when the electronic device 301 is in the flex state.

In an embodiment, the state in which the rear surface 342 of the third housing 311 or the rear surface 342 of the fourth housing 312 faces the ground 500 in the flex state of the electronic device 301 may include not only a state in which at least a portion of the rear surface 342 of the third housing 311 or the rear surface 342 of the fourth housing 312 is in contact with the ground 500, but also a state in which the same is placed on a specific surface such as a palm or a desk. For example, the state in which the rear surface 342 of the third housing 311 or the rear surface 342 of the fourth housing 312 faces the ground 500 in the flex state of the electronic device 301 may be a state in which at least a portion of the rear surface 342 of the third housing 311 or the rear surface 342 of the fourth housing 312 is placed on a palm and positioned in the air.

For example, when the electronic device 301 is in a flex state, the rear surface 342 of the third housing 311 may face the ground 500, and the second housing structure 212 may stand in the air based on the third housing 311. However, the disclosure is not limited thereto. The third stand state 501 of the electronic device 301 may be a state in which, when the electronic device 301 is in a flex state, the rear surface 342 of the fourth housing 312 faces the ground 500, and the third housing 311 stands in the air based on the fourth housing 312.

In an embodiment, the third stand state 501 of the electronic device 301 may be determined based on a signal detected by an inertial sensor, such as a gyro sensor or an accelerometer. For example, when the signal detected by the inertial sensor, such as a gyro sensor and/or an accelerometer, is determined to be a signal indicating that the axial movement angle of either the rear surface 342 of the third housing 311 or the rear surface 342 of the fourth housing 312 has moved or stopped within a predetermined angle, the electronic device 301 may determine that the rear surface 342 of any one housing structure among the rear surface 342 of the third housing 311 or the fourth housing 312 faces the ground 500.

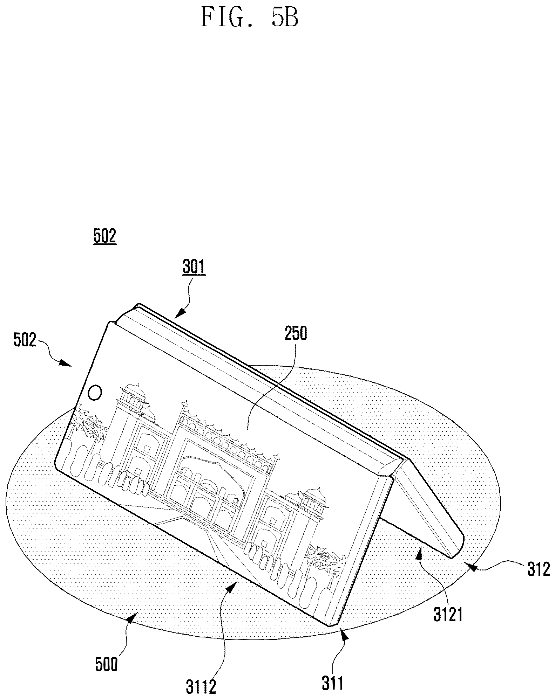

FIG. 5B illustrates a fourth stand state 502 of the electronic device 301 in FIGS. 3A, 3B, and 3C according to an embodiment of the disclosure.

In an embodiment, the fourth stand state 502 of the electronic device 301 may be a state in which a third edge 3112 of the third housing 311 or a fourth edge 3121 of the fourth housing 312 faces the ground 500 when the electronic device 301 in a flex state.

In an embodiment, the fourth stand state 502 of the electronic device 301 may be a state in which, in the flex state of the electronic device 301, the third edge 3112 of the third housing 311 or the fourth edge 3121 of the fourth housing 312 is aligned with the ground 500 within a predetermined angular range.

In an embodiment, the state in which the third edge 3112 of the third housing 311 or the fourth edge 3121 of the fourth housing 312 faces the ground 500 in the flex state of the electronic device 301 may include a state in which the third edge 3112 of the third housing 311 or the fourth edge 3121 of the fourth housing 312 is in contact with the ground 500, but also a state in which the same is placed on a specific surface such as a palm or a desk. For example, the state in which the third edge 3112 of the third housing 311 or the fourth edge 3121 of the fourth housing 312 of the electronic device 301 faces the ground 500 in the flex state of the electronic device 301 may be a state in which the third edge 3112 of the third housing 311 or the fourth edge 3121 of the fourth housing 312 is placed on the palm and positioned in the air.

In an embodiment, the fourth stand state 502 of the electronic device 301 may be determined based on a signal detected by an inertial sensor, such as a gyro sensor or an accelerometer.

In an embodiment, the electronic device 301 in FIGS. 3A, 3B, 3C, 5A, and 5B may have a rectangular shape where the length in the transverse direction is greater than the length in the longitudinal direction when viewed toward the flexible display 230. In this case, two edges located along the longitudinal direction of the electronic device 301 may be the third edge 3112 and the fourth edge 3121. The third edge 3112 may be a first side edge of the electronic device 301, and the fourth edge 3121 may be a second side edge of the electronic device 210.

In an embodiment, the first stand state 401 in FIG. 4A and the third stand state 501 in FIG. 5A may be substantially identical. The second stand state 402 in FIG. 4B and the fourth stand state 502 in FIG. 5B may be substantially identical.

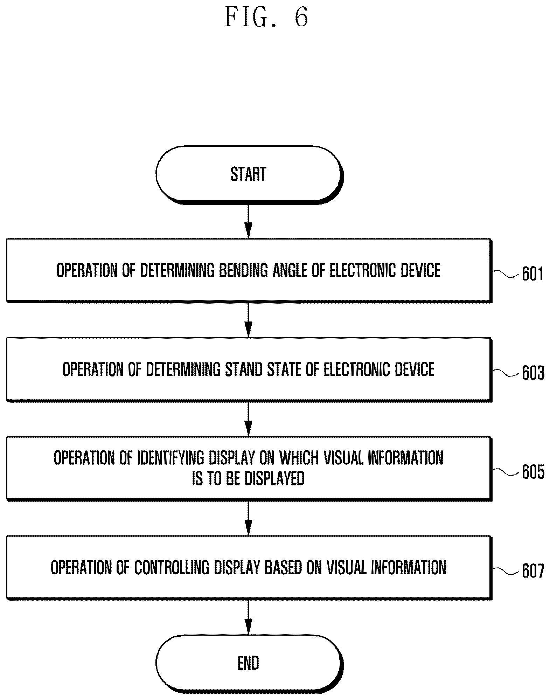

FIG. 6 is a flowchart illustrating a method for controlling a display (e.g., the display module 160 in FIG. 1) of an electronic device (e.g., the electronic device 101 in FIG. 1) according to an embodiment of the disclosure.

The electronic device 101 in FIG. 6 may be identical to the electronic device 201 in FIGS. 2A, 2B, and 2C and/or the electronic device 301 in FIGS. 3A, 3B, and 3C.

The display 160 in FIG. 6 may include the flexible display 230 and the cover display 250 of the electronic device 201 in FIGS. 2A, 2B, and 2C and/or the electronic device 301 in FIGS. 3A, 3B, and 3C.

In the following embodiment, operations may be performed sequentially, but are not necessarily performed sequentially. For example, the order of each of the operations may be changed, and at least two operations may be performed in parallel.

According to an embodiment, operations 601 to 607 may be understood as being performed by a processor (e.g., the processor 120 in FIG. 1) of an electronic device (e.g., the electronic device 101 in FIG. 1).

In an embodiment, in operation 601, the electronic device 101, under the control of the processor 120, may determine the bending angle of the electronic device 101.

In an embodiment, the bending angle may be detected based on one or more sensors included in the electronic device 101. The electronic device 101 may use a tilt sensor to detect an angle or distance between the first housing 211 and the second housing 212, and determine the bending angle based on the angle or distance between the first housing 211 and the second housing 212. The electronic device 101 may use the tilt sensor to detect an angle or distance between the third housing 311 and the fourth housing 312, and determine the bending angle based on the angle or distance between the third housing 311 and the fourth housing 312.

In an embodiment, the electronic device 101, under the control of the processor 120, may detect changes in the curvature of a folding area (the folding area 231c in FIG. 2) of the flexible display 230, enabling the electronic device 101 to determine the bending angle.

In an embodiment, when the electronic device 101 may determine, based on the detected inclination between the housings or the detected curvature of the folding area (the folding area 231c in FIG. 2) of the flexible display 230, that a specific angle (a certain degree) formed between the first area 231 and the second area 232 of the flexible display 230 is a first angle (e.g., approximately 0 degrees), the electronic device 101 may determine that the electronic device 101 is in a folded state.

In an embodiment, when the electronic device 101 may determine, based on the detected inclination between the housings or the detected curvature of the folding area (the folding area 231c in FIG. 2) of the flexible display 230, that a specific angle (a certain degree) formed between the first area 231 and the second area 232 of the flexible display 230 falls within a specific angle range (e.g., an angle greater than approximately 0 degrees and less than approximately 180 degrees), the electronic device 101 may determine that the electronic device 101 is in a flex state.

In an embodiment, when the electronic device 101 may determine, based on the detected inclination between the housings or the detected curvature of the folding area (folding area 231c in FIG. 2) of the flexible display 230, that a specific angle (a certain degree) formed between the first area 231 and the second area 232 of the flexible display 230 is a second angle (e.g., approximately 180 degrees), the electronic device 101 may determine that the electronic device 101 is in an extended state.

In an embodiment, in operation 603, the electronic device 101 may determine the stand state of the electronic device 101 under the control of the processor 120.

In an embodiment, when it is determined that the electronic device 101 is in a flex state based on the bending angle, the electronic device 101 may determine the stand state of the electronic device 101. However, the disclosure is not limited thereto, and the electronic device 101 may determine the bending angle and the stand state separately.

In an embodiment, the electronic device 101 may determine the stand state of the electronic device 101, based on a signal detected by an inertial sensor, such as a gyro sensor or an accelerometer.

Referring to FIGS. 4A, 4B, 5A, and 5B, the stand state of the electronic device 101 may be one of the first stand state 401, the second stand state 402, the third stand state 501, or the fourth stand state 502.

In an embodiment, in operation 603, when the electronic device 101 determines the stand state, the electronic device 101 may determine information about the distance information between the electronic device 101 and an object.

In an embodiment, in operation 603, when the electronic device 101 determines the stand state, the electronic device 101 may measure the distance between the electronic device 101 and an object to determine whether the electronic device 101 and the object (e.g., a wall or the ground) are within a predetermined distance.

In an embodiment, the electronic device 101 may measure the distance between the electronic device 101 and the object by using a proximity sensor (e.g., a time-of-flight (TOF) sensor).

In an embodiment, in operation 605, the electronic device 101, under the control of the processor 120, may identify a display on which visual information is to be displayed.

In an embodiment, in operation 605, the electronic device 101, under the control of the processor 120, may determine the display on which the visual information is to be displayed, based on the bending angle and the stand state.

In an embodiment, in operation 605, when the electronic device 101 is in the first stand state 401 or the third stand state 501, and when the bending angle is within a first angle range (e.g., greater than approximately 0 degrees and less than or equal to approximately 30 degrees), the electronic device 101, under the control of the processor 120, may control the visual information to be displayed on the flexible display 230 and the cover display 250.

In an embodiment, in operation 605, when the electronic device 101 is in the first stand state 401 or the third stand state 501, and when the bending angle is within the first angle range (e.g., greater than approximately 0 degrees and less than or equal to approximately 30 degrees), the electronic device 101, under the control of the processor 120, may control the visual information to be displayed on an area of the flexible display 230 corresponding to the housing facing the ground and on the cover display 250.

In an embodiment, in operation 605, the electronic device 101, under the control of the processor 120, may control visual information or visual effects to be displayed on the display (e.g., the flexible display 230 and/or the cover display 250) based on the bending angle and stand state of the electronic device 101.

In an embodiment, the visual information may include a visual effect and/or an object (e.g., notification information).

In an embodiment, the visual information may be color information and/or brightness information of the display (e.g., the flexible display 230 and/or the cover display 250). The visual information may be color information and/or brightness information of an object displayed on the display (e.g., the flexible display 230 and/or the cover display 250).

In an embodiment, the visual effect may be a user experience or user interface in which the display (e.g., the flexible display 230 and/or the cover display 250) functions like a lighting member by using the light source of the display (e.g., the flexible display 230 and/or the cover display 250).

In an embodiment, the visual effect may include an operation in which all or at least a portion of the entire display (e.g., the flexible display 230 and/or the cover display 250) is displayed in a designated color, based on the bending angle and stand state of the electronic device 101.

In an embodiment, the visual effect may be an operation of displaying the edge area of the display (e.g., the flexible display 230 and/or the cover display 250) in a designated color. The edge area of the display (e.g., the flexible display 230 and/or the cover display 250) may be an area of the flexible display 230 and/or the cover display 250 having a designated thickness from the frame 2111, 2211, 3111, or 3211 of the electronic device 101.

In an embodiment, the visual effect may include an operation in which, in conjunction with the content displayed on the cover display 250, all or at least a portion of the flexible display 230 is displayed in a color based on content. The electronic device 101, under the control of the processor 120, may identify colors contained in the content displayed on the cover display 250. The electronic device 101, under the control of the processor 120, may identify a ranking based on the proportion of colors contained in the content displayed on the cover display 250. Based on the first-ranked color and/or colors within a designated ranking according to the ranking among the colors, the electronic device 101, under the control of the processor 120, may display all or at least a portion of the flexible display 230 in a color based on the content.

For example, the proportion of colors in the content displayed on the cover display 250 may be 30% red, 10% blue, 5% yellow, and 1% black. The electronic device 101, under the control of the processor 120, may assign the first rank to red, the second rank to blue, the third rank to yellow, and the fourth rank to black. The electronic device 101, under the control of the processor 120, may display all or at least a portion of the flexible display 230 in the first-ranked red color as the content-based color. If the designated rank is up to the second rank, the electronic device 101, under the control of the processor 120, may display all or at least a portion of flexible display 230 in red and blue as content-based colors.

In an embodiment, the visual effect may include an operation in which, when the electronic device 101 displays a notification (e.g., a message notification or a schedule notification), all or at least a portion of flexible display 230 is displayed in a designated color according to the notification. For example, when the notification is an urgent message, the electronic device 101, under the control of the processor 120, may display all or at least a portion of the flexible display 230 in a designated color (e.g., red). When the notification is a normal message, the electronic device 101, under the control of the processor 120, may display all or at least a portion of the flexible display 230 in a designated color (e.g., green).

In an embodiment, the electronic device 101, under the control of the processor 120, may identify whether the content included in the notification is urgent or normal, based on context data stored in the memory 130. The color assignment based on the notification type (e.g., urgent or normal) may be preset by a user's selection and stored in memory 130. However, the disclosure is not limited thereto, and the color assignment based on the notification type (e.g., urgent or normal) may be preset in the application 146 stored in the electronic device 101.

In an embodiment, the visual effect may include an operation of displaying differently the intensity of the color displayed on the flexible display 230, the color displayed on the flexible display 230, and/or the area displayed on the flexible display 230 according to the time (e.g., daytime or nighttime). For example, during daytime (e.g., from sunrise to sunset), the electronic device 101, under the control of the processor 120, may display colors on the flexible display 230 with an intensity higher than a reference intensity. During nighttime (e.g., from sunset to sunrise), the electronic device 101 may, under the control of the processor 120, display colors on the flexible display 230 with an intensity lower than the reference intensity.

For example, the intensity of a color may be saturation and brightness. For color, saturation may range from 0 for the lowest saturation to 100 for the highest saturation. For each color, brightness may range from 0 for the lowest brightness to 100 for the highest brightness. Based on saturation 50 and brightness 50 which are midpoints of saturation and brightness, the electronic device 101 may display colors with saturation and/or brightness exceeding saturation 50 and/or brightness 50 during daytime when displaying the colors on the flexible display 230. Based on saturation 50 and brightness 50 which are midpoints of saturation and brightness, the electronic device 101 may display colors with saturation and/or brightness equal to or lower than saturation 50 and/or brightness 50 during nighttime when displaying the colors on the flexible display 230.

In an embodiment, the visual effect may include an operation of displaying a color at a designated color temperature on all or at least a portion of the flexible display 230 depending on whether the user is sleeping. For example, the color temperature may range from 1000K to 10000K. When the user's sleep is detected, the electronic device 1000, under the control of the processor 120, may display colors with color temperature equal to or lower than a reference color temperature (e.g., 5000K) on all or at least a portion of the flexible display 230. The electronic device 101 may determine whether the user is sleeping, based on a designated time (e.g., 10 PM) and/or the duration of the electronic device 101's idle state. For example, if the electronic device 101's idle state persists for 30 minutes or more after 10 PM, the electronic device 101 may determine that the user is in a sleeping state.

In an embodiment, the visual effect may include an operation of changing the speed at which color is displayed on all or at least a portion of the flexible display 230, based on the genre or tempo of media content such as music, video, or streaming when playing the media content. The electronic device 101 may identify genre and/or tempo information included in the media content or metadata of the media content. The electronic device 101 may pre-store color information corresponding to the genre and/or tempo, or information about a color change speed, in the memory 130. The electronic device 101, under the control of the processor 120, may determine the color information or color change speed corresponding to the identified genre and/or tempo information, based on the identified genre and/or tempo information.

In an embodiment, the visual effect may be a lighting effect that causes all or at least a portion of the cover display 250 to be displayed in a designated color.

In an embodiment, the visual effect may include an operation in which, in conjunction with content displayed on the flexible display 230, all or at least a portion of the cover display 250 is displayed in a color based on the content. The electronic device 101, under the control of the processor 120, may identify colors contained in the content displayed on the flexible display 230. The electronic device 101, under the control of the processor 120, may identify a ranking based on the proportion of colors contained in the content displayed on the flexible display 230. Based on the colors within the first-ranked color and/or colors within a designated ranking according to the ranking among the colors, the electronic device 101, under the control of the processor 120, may display all or at least a portion of the cover display 250 in a color based on the content.

For example, the proportion of colors in the content displayed on the flexible display 230 may be 30% red, 10% blue, 5% yellow, and 1% black. The electronic device 101, under the control of the processor 120, may assign the first rank to red, the second rank to blue, the third rank to yellow, and the fourth rank to black. The electronic device 101, under the control of the processor 120, may display all or at least a portion of the cover display 250 in the first-ranked color, red, as a color based on the content. If the designated rank is up to the second rank, the electronic device 101, under the control of the processor 120, may display all or at least a portion of the cover display 250 in red and blue as content-based colors.

In an embodiment, the visual effect may include an operation of changing the speed at which color is displayed on all or at least a portion of the cover display 250 based on the genre or tempo of media content such as music, video, or streaming when playing the media content.

In an embodiment, the electronic device 101 may use the camera 251 to detect the proximity of an external object (e.g., a wall). When the external object is within a designated range from the electronic device 101, the electronic device 101 may display all or at least a portion of the cover display 250 in a designated color. The visual effect may include an operation in which, when the external object is within the designated range from the electronic device 101, the electronic device 101 displays all or at least a portion of the cover display 250 in a designated color.

In an embodiment, when the electronic device 101 is in a folded mode and in the first stand state 401 or the third stand state 501, and when content is being played on an area (e.g., the first area 231 or the second area 232) of the flexible display 230 positioned in the housing not placed on the floor, the electronic device 101, under the control of the processor 120, may turn off an area (e.g., the first area 231 or the second area 232) of the flexible display 230 positioned in the housing placed on the floor. The visual effect may include an operation of turning off an area (e.g., the first area 231 or the second area 232) of the flexible display 230 positioned in the housing placed on the floor when the electronic device 101 is in a folded mode and in the first stand state 401 or the third stand state 501 and when content is being played in an area (e.g., the first area 231 or the second area 232) of the flexible display 230 positioned in the housing not placed on the floor.

In an embodiment, when the electronic device 101 is in a folded mode and in the first stand state 401 or the third stand state 501 at night, the electronic device 101, under the control of the processor 120, may display color in only the area (e.g., the first area 231 or the second area 232) of the flexible display 230 positioned in the housing placed on the floor. The visual effect may include an operation in which, when the electronic device 101 is in a folded state and in the first stand state 401 or the third stand state 501 at night, the electronic device 101, under the control of the processor 120, may include the operation of displaying color in only the area(e.g., the first area 231 or the second area 232) of the flexible display 230 positioned in the housing placed on the floor. In an embodiment, in operation 605, when the electronic device 101 is in the first stand state 401 or the third stand state 501 and the bending angle is within a second angle range (e.g., greater than approximately 30 degrees and less than or equal to approximately 150 degrees), the electronic device 101, under the control of the processor 120, may control visual information to be displayed on the flexible display 230.

In an embodiment, in operation 605, when the electronic device 101 is in the first stand state 401 or the third stand state 501, when the distance between the electronic device 101 and an object (e.g., wall) is within a designated distance, and when the bending angle is within the second angle range (e.g., greater than approximately 30 degrees and less than or equal to approximately 150 degrees), the electronic device 101, under the control of the processor 120, may control visual information to be displayed on the flexible display 230 and the cover display 250.

In an embodiment, the electronic device 101 may determine the distance to the object (e.g., a wall) by using the camera 251 that is coplanar with the cover display 250. The electronic device 101 may determine the size or area of an external object (or thing) by using the camera 251 substantially coplanar with the cover display 250.

In an embodiment, when the electronic device 101 is in the first stand state 401 or the third stand state 501, when the distance between the electronic device 101 and the object (e.g., a wall) is within a designated distance, and when the size or area of the object is determined to be equal to or greater than a designated size, the electronic device 101, under the control of the processor 120, may control visual information to be displayed on the flexible display 230 and the cover display 250.

In an embodiment, when the electronic device 101 is in the first stand state 401 or the third stand state 501, an object detectable through the camera 251 may be, for example, a wall. However, the disclosure is not limited thereto, and the object may include any stuff or thing having a designated size, a designated area, or a designated volume.

In an embodiment, in operation 605, if the electronic device 101 is in an extended state or when the bending angle is greater than a designated angle (e.g., approximately 150 degrees), the electronic device 101 may, under the control of the processor 120, turn off the cover display 250. The disclosure is not limited thereto. In an embodiment, in operation 605, when the electronic device 101 is in the extended state or when the bending angle is greater than the designated angle (e.g., approximately 150 degrees), the electronic device 101 may, under the control of the processor 120, display visual information or visual effects on the cover display 250.

In an embodiment, in operation 605, when the electronic device 101 is in the first stand state 401 or the third stand state 501, when the distance between the electronic device 101 and an object(e.g., a wall) is within a designated distance, and when the bending angle is at a designated angle (e.g., approximately 90 degrees), the electronic device 101, under the control of the processor 120, may display a visual effect or visual information on the entire cover display 250.

In an embodiment, the electronic device 101, under the control of the processor 120, may distinguish between an area of the cover display 250 that is closer to an object (e.g., a wall) and an area of the cover display 250 that is farther from the object (e.g., a wall), based on the designated distance. In operation 605, when the electronic device 101 is in the first stand state 401 or the third stand state 501, when the distance between the electronic device 101 and the object (e.g., wall) is within the designated distance, and when the bending angle is within a fourth angle range (e.g., greater than approximately 90 degrees and less than approximately 150 degrees), the electronic device 101, under the control of the processor 120, may control the area of the cover display 250 that is farther from the object (e.g., wall) to be brighter in color than the area of the cover display 250 that is closer to the object (e.g., wall).

In an embodiment, in operation 605, when the electronic device 101 is in the first stand state 401 or the third stand state 501, when the distance between the electronic device 101 and an object (e.g., a wall) is within a designated distance, and the bending angle is within the second angle range (e.g., greater than approximately 30 degrees and less than or equal to approximately 150 degrees), the electronic device 101, under the control of the processor 120, may increase the display intensity of visual information on the flexible display 230 and the cover display 250.

In an embodiment, the operation of increasing the display intensity of visual information on the flexible display 230 and/or the cover display 250 may be an operation of controlling the saturation of a color displayed on the flexible display 230 and/or the cover display 250 to be increased and/or controlling the brightness of the flexible display 230 and/or the cover display 250 to be increased.

In an embodiment, in operation 605, when the electronic device 101 is in the first stand state 401 or the third stand state 501, and when the bending angle is within a third angle range (e.g., greater than approximately 80 degrees and less than approximately 130 degrees), the electronic device 101, under the control of the processor 120, may control visual information to be displayed on an area of the flexible display 230 corresponding to the housing in the air.

In an embodiment, in operation 605, when the electronic device 101 is in the second stand state 402 or the fourth stand state 502, and when the bending angle is within the first angle range (e.g., greater than approximately 0 degrees and less than or equal to approximately 30 degrees), the electronic device 101 may, under the control of the processor 120, control the display of visual information on the cover display 250.

In an embodiment, in operation 605, when the electronic device 101 is in the second stand state 402 or the fourth stand state 502, when the electronic device 101 is in contact with an object (e.g., the ground), and when the bending angle is within the first angle range (e.g., greater than approximately 0 degrees and less than or equal to approximately 30 degrees), the electronic device 101, under the control of the processor 120, may control visual information to be displayed on the cover display 250 and the flexible display 230.

In an embodiment, in operation 605, when the electronic device 101 is in the second stand state 402 or the fourth stand state 502, and when the bending angle is within the second angle range (e.g., greater than approximately 30 degrees and less than or equal to approximately 150 degrees), the electronic device 101, under the control of the processor 120, may control visual information to be displayed on the flexible display 230 and the cover display 250.

In an embodiment, during operation 605, when the electronic device 101 is in the second stand state 402 or the fourth stand state 502, when the electronic device 101 is in contact with an object (e.g., the ground), and when the bending angle is within the second angle range (e.g., greater than approximately 30 degrees and less than or equal to approximately 150 degrees), the electronic device 101, under the control of the processor 120, may display visual information on the flexible display 230 and the cover display 250, and may control the display intensity of the visual information on the flexible display 230 to be increased.

In an embodiment, when the electronic device 101 is in the second stand state 402 or the fourth stand state 502, the electronic device 101, under the control of the processor 120, may detect the distance between the flexible display 230 and an object (e.g., the ground) based on the bending angle. The electronic device 101, under the control of the processor 120, may pre-store, in the memory 130, information about the distance between the flexible display 230 and the object (e.g., the ground) corresponding to the bending angle when in the second stand state 402 or the fourth stand state 502. However, the disclosure is not limited thereto, and the electronic device 101, under the control of the processor 120, may detect the distance between the flexible display 230 and the object (e.g., the ground) based on the static voltage, static current, and/or magnetic field of the flexible display 230 when in the second stand state 402 or the fourth stand state 502. The electronic device 101, under the control of the processor 120, may detect the distance between the flexible display 230 and the object (e.g., the ground) based on a sensor module(e.g., a geomagnetic sensor or an accelerometer) when in the second stand state 402 or the fourth stand state 502.

In an embodiment, in operation 605, when the electronic device 101 is in the second stand state 402 or the fourth stand state 502, the electronic device 101, under the control of the processor 120, may display visual information or a visual effect on the flexible display 230 based on the detected distance between the flexible display 230 and the object (e.g., the ground). For example, when the detected distance between the flexible display 230 and the object (e.g., the ground) is greater than a designated distance, the electronic device 101, under the control of the processor 120, may increase the brightness of the flexible display 230 beyond designated brightness (or reference brightness).

In an embodiment, in operation 605, when the electronic device 101 is in the second stand state 402 or the fourth stand state 502, and when the bending angle is within the first angle range (e.g., greater than approximately 0 degrees and less than or equal to approximately 30 degrees), the electronic device 101, under the control of the processor 120, may display visual information or a visual effect on an area of the flexible display 230 that is at a designated height from the object (e.g., the ground).

In an embodiment, in operation 605, when the electronic device 101 is in the second stand state 402 or the fourth stand state 502, and when the bending angle is within the third angle range (e.g., an angle greater than approximately 80 degrees and less than approximately 130 degrees), the electronic device 101, under the control of the processor 120, may display visual information or a visual effect on the entire flexible display 230.

In one embodiment, the operation of increasing the display intensity of visual information on the flexible display 230 and/or the cover display 250 may be an operation of controlling the saturation of a color displayed on the flexible display 230 and/or the cover display 250 to be increased and/or controlling the brightness of the flexible display 230 and/or the cover display 250 to be increased.

In an embodiment, in operation 605, when the bending angle of the electronic device 101 is the first angle (e.g., approximately 0 degrees), the electronic device 101 may, under the control of the processor 120, control visual information to be displayed on the cover display 250.

In an embodiment, in operation 605, when the bending angle of the electronic device 101 is the second angle (e.g., approximately 180 degrees), the electronic device 101 may, under the control of the processor 120, control visual information to be displayed on the flexible display 230.

In an embodiment, in operation 607, the electronic device 101 may, under the control of the processor 120, control the display based on the visual information.

In an embodiment, the operation of displaying based on visual information may be changed by a user input.

In an embodiment, the visual information may be information about color information and/or brightness information of the display (e.g., the flexible display 230 and/or the cover display 250). The visual information may be information about the color information and/or brightness information of an object displayed on the display (e.g., the flexible display 230 and/or the cover display 250).

For example, based on the bending angle and the stand state, the electronic device 101 may control the color and/or brightness of the display (e.g., the flexible display 230 and/or the cover display 250), thereby utilizing the display(e.g., the flexible display 230 and/or the cover display 250) may be used as a lighting member.

For example, color information may include information about a color displayed on the display (e.g., the flexible display 230 and/or the cover display 250), such as hue, saturation, and brightness. The color information may include information related to the color temperature of the display (e.g., the flexible display 230 and/or the cover display 250). For example, the display (e.g., the flexible display 230 and/or the cover display 250) may include multiple subpixels. When all subpixels are turned on, the display may appear white; when all are turned off, the display may appear black. The electronic device 101, under the control of the processor 120, may control the brightness by controlling the turning on/off of the multiple subpixels included in the display (e.g., the flexible display 230 and/or the cover display 250).

For example, brightness information may include information about the illumination, luminous intensity, luminance, and luminous flux of the display (e.g., the flexible display 230 and/or the cover display 250).

In an embodiment, the visual information may be produced based on an application running on the electronic device 101.

For example, the electronic device 101 may produce information about color information and/or brightness information of an object displayed on the display (e.g., the flexible display 230 and/or the cover display 250) by using an icon employed by the running application and/or a color code or color of the running application. Color information may be produced by extracting colors or color codes of the icon used by the running application on a pixel-by-pixel basis, and by using at least one color or color code having a high hue/saturation/brightness (HSB) average value.

In this case, the electronic device 101 may produce color information by using a color or color code, among the extracted colors or color codes, in which the hue is within the range of 0 to 360, the saturation is within the range of 30 to 100, and the brightness is within the range of 80 to 100. The color code or color of the icon used by the running application may be designated by an application developer or the electronic device 101 when the application is installed, or may be configured by a user.

In an embodiment, the electronic device 101 may produce information about color information and/or brightness information of an object displayed on the display (e.g., the flexible display 230 and/or the cover display 250) by using the color code or color of a thumbnail or a cover used by media (music or video) being played. Color information may be produced by extracting colors or color codes of the thumbnail or cover used by the media (music or video) being played on a pixel-by-pixel basis, and by using at least one color or color code having a high hue/saturation/brightness (HSB) average value.

In an embodiment, the electronic device 101, under the control of the processor 120, may differently control the display intensity of the visual information based on the left/right balance, volume, and/or stereo (equalization) properties of the media (music or video) being played. For example, when the volume of the media being played increases, the intensity of the visual information may also increase. When the left/right balance or stereo (equalization) properties of the media being played change, the intensity of the visual information may change.

In an embodiment, in operation 607, the electronic device 101, under the control of the processor 120, may determine the display position of the visual information.

In an embodiment, the electronic device 101, under the control of the processor 120, may display the visual information around an object (e.g., an icon or an image related to a running application) displayed on the flexible display 230 and/or the cover display 250.

In an embodiment, the electronic device 101, under the control of the processor 120, may display a color as a line with a predetermined thickness in an area of the flexible display 230 and/or the cover display 250 adjacent to the frame 2111, 2211, 3111, or 3211 of the electronic device 101. When displaying color as a line or around the object, the electronic device 101 may add animation effects such as multi-color, glow, glitter, wave, and/or bubble to the visual information. The visual information may further include animation effects.

In an embodiment, the visual information may include an object (e.g., notification information). In this case, the electronic device 101 may identify a position where the object (e.g., notification information) will be displayed on the flexible display 230 and/or the cover display 250, based on the folding angle and/or the stand state.

For example, when the electronic device 101 is in the first stand state 401 or the third stand state 501, and when the bending angle is within the first angle range (e.g., greater than approximately 0 degrees and less than or equal to approximately 30 degrees), the electronic device 101, under the control of the processor 120, may control the object (e.g., notification information) to be displayed on an area of the flexible display 230 corresponding to the housing facing the ground.

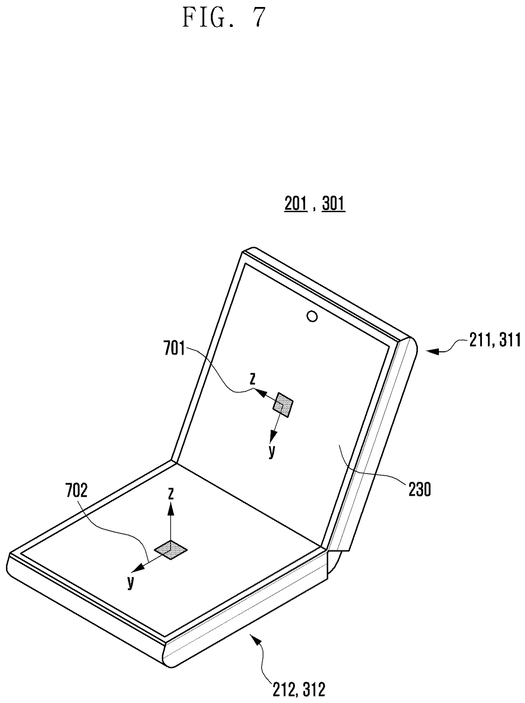

FIG. 7 illustrates a first inertial sensor 701 and a second inertial sensor 702 according to an embodiment of the disclosure.

In an embodiment, the respective housing 211, 212, 311, and 312 of the electronic device 201 in FIGS. 2A, 2B, and 2C and/or the electronic device 301 in FIGS. 3A, 3B, and 3C may include the first inertial sensor 701 and the second inertial sensor 702. Based on positions wherein the first inertial sensor 701 and the second inertial sensor 702 are detected, the electronic device 201 in FIGS. 2A, 2B, and 2C and/or the electronic device 301 in FIGS. 3A, 3B, and 3C may determine a stand state.

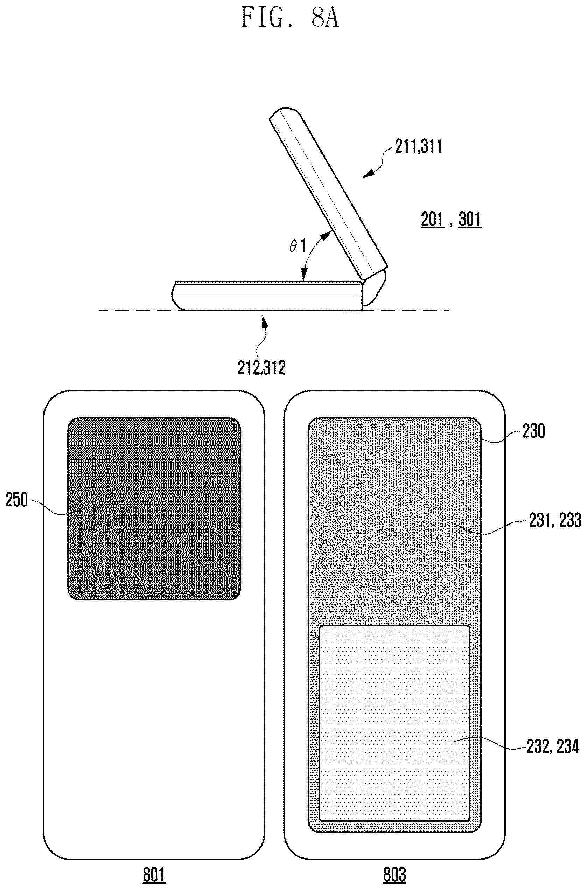

FIG. 8A illustrates a display control area according to the bending angle and stand state of the electronic device 201 in FIGS. 2A, 2B, and 2C and/or the electronic device 301 in FIGS. 3A, 3B, and 3C according to an embodiment of the disclosure.

In an embodiment, reference numeral 801 is a plan view illustrating an area of the cover display 250 controlled according to the bending angle of the electronic device 101, and reference numeral 803 is a plan view illustrating an area of the flexible display 250 controlled according to the bending angle of the electronic device 101.

In FIG. 8A, when the electronic device 201 or 301 is in a first stand state (e.g., the first stand state 401 in FIG. 4A) or a third stand state (e.g., the third stand state 501 in FIG. 5A), and when the bending angle (e.g., θ1) of the electronic device 201 or 301 is within a first angle range (e.g., greater than approximately 0 degrees and less than or equal to approximately 30 degrees), the electronic device 201 or 301 may control, under the control of a processor (e.g., the processor 120 in FIG. 1), visual information to be displayed on the flexible display 230.

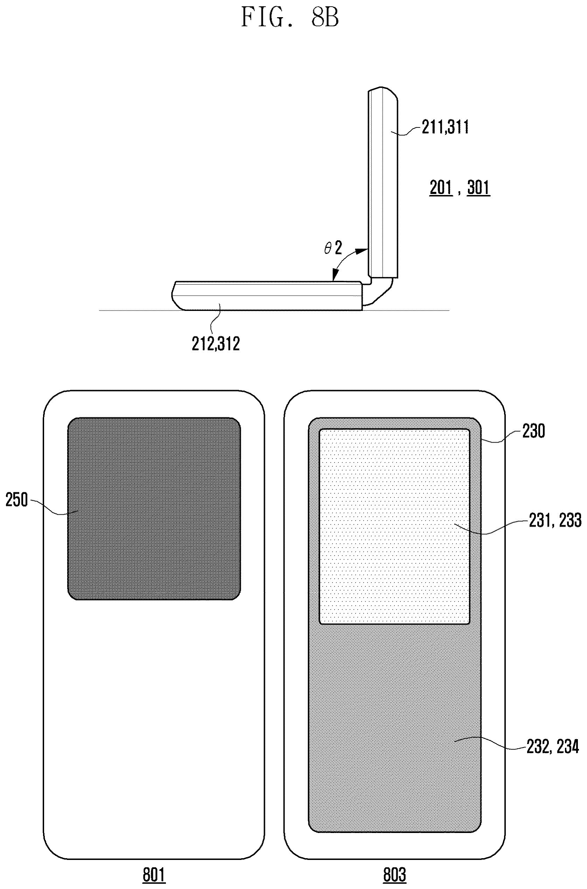

FIG. 8B illustrates a display control area according to the bending angle and stand state of the electronic device 201 in FIGS. 2A, 2B, and 2C and/or the electronic device 301 in FIGS. 3A, 3B, and 3C according to an embodiment of the disclosure.

In an embodiment, reference numeral 801 is a plan view illustrating an area of the cover display 250 controlled according to the bending angle of the electronic device 101, and reference numeral 803 is a plan view illustrating an area of the flexible display 250 controlled according to the bending angle of the electronic device 101.

In FIG. 8B, when the electronic device 201 or 301 is in the first stand state 401 or the third stand state 501, and when the bending angle (e.g., θ2) of the electronic device 201 or 301 is at a designated angle (90 degrees) or within a third angle range (e.g., an angle greater than approximately 80 degrees and less than approximately 130 degrees), the electronic device 201 or 301, under the control of the processor 120, may control visual information to be displayed on the flexible display area 231 or 233 corresponding to the housing 211 or 311 standing in the air. In this case, the cover display 250 may be in a standby state, an off state, and/or an always-on display (AOD) state.

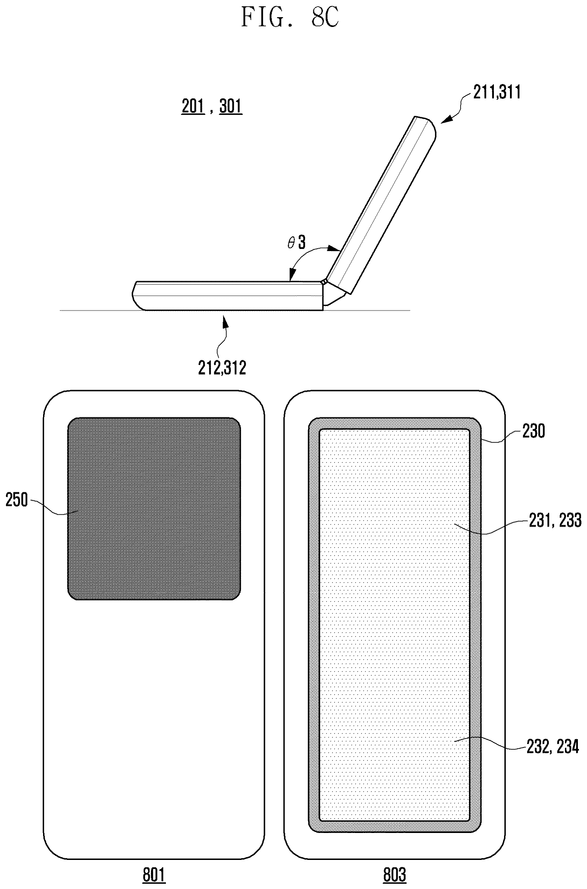

FIG. 8C illustrates a display control area according to the bending angle and stand state of the electronic device 201 in FIGS. 2A, 2B, and 2C and/or the electronic device 301 in FIGS. 3A, 3B, and 3C according to an embodiment of the disclosure.

In an embodiment, reference numeral 801 is a plan view illustrating an area of the cover display 250 controlled according to the bending angle of the electronic device 101, and reference numeral 803 is a plan view illustrating an area of the flexible display 250 controlled according to the bending angle of the electronic device 101.

In FIG. 8C, when the electronic device 201 or 301 is in the first stand state 401 or the third stand state 501, and when the bending angle (e.g., θ3) of the electronic device 201 or 301 is within a third angle range (e.g., greater than approximately 80 degrees and less than or equal to approximately 130 degrees), the electronic device 201 or 301, under the control of the processor 120, may control visual information to be displayed in an edge area of the flexible display 230. In this case, the cover display 250 may be in a standby state, an off state, and/or an always-on display (AOD) state. The edge area of the display (e.g., the flexible display 230 and/or the cover display 250) may be an area of the flexible display 230 and/or the cover display 250 having a designated thickness from the frame 2111, 2211, 3111, or 3211 of the electronic device 101.

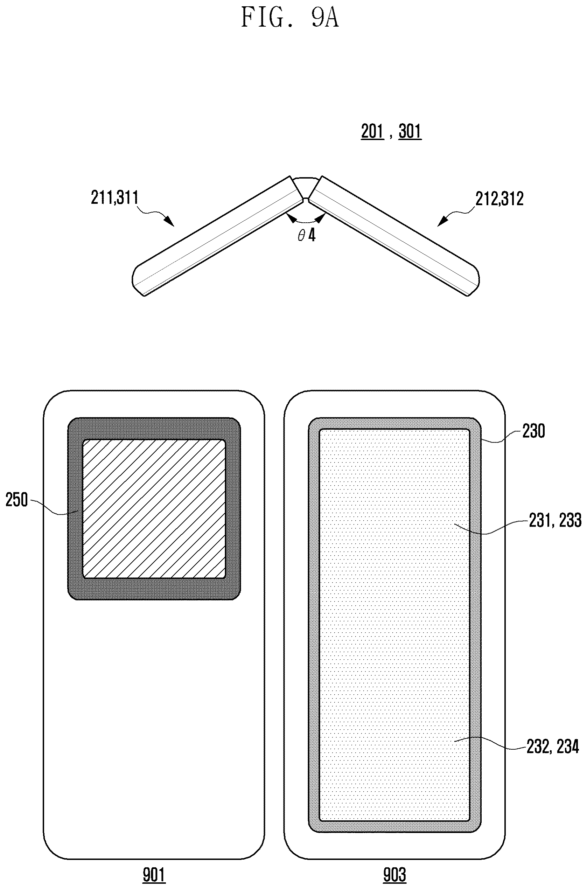

FIG. 9A illustrate a display control area according to the bending angle and stand state of the electronic device 201 in FIGS. 2A, 2B, and 2C, and/or the electronic device 301 in FIGS. 3A, 3B, and 3C according to an embodiment of the disclosure.

In an embodiment, reference numeral 901 is a plan view illustrating an area of the cover display 250 controlled according to the bending angle of the electronic device 101, and reference numeral 903 is a plan view illustrating an area of the flexible display 250 controlled according to the bending angle of the electronic device 101.

In FIG. 9A, when the electronic device 201 or 301 is in the second stand state 402 or the fourth stand state 502, and when the bending angle (e.g., θ4) of the electronic device 201 or 301 is within a sixth angle range (e.g., greater than approximately 80 degrees and less than or equal to approximately 130 degrees), the electronic device 201 or 301 may control, under the control of a processor (e.g., the processor 120 in FIG. 1), visual information to be displayed on the edge area of the flexible display 230 and the edge area of the cover display 250.

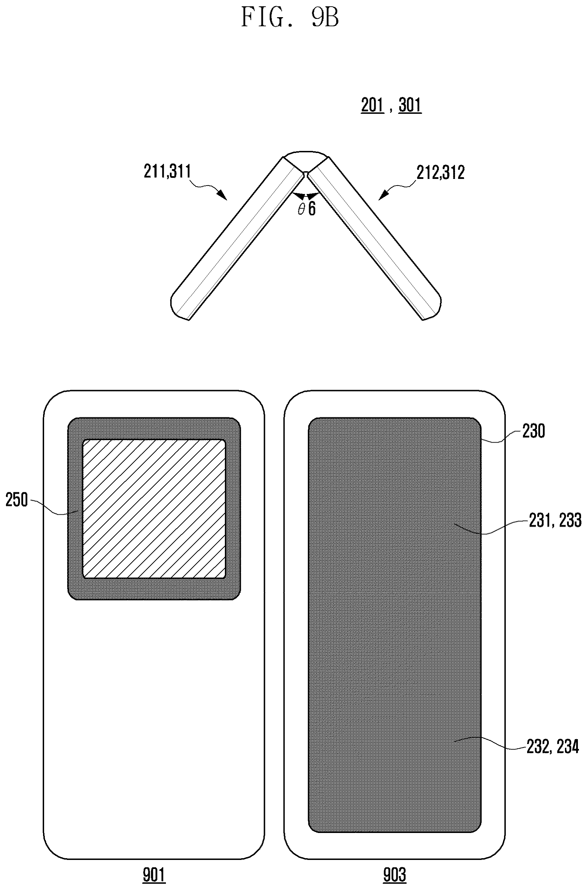

FIG. 9B illustrates a display control area according to the bending angle and stand state of the electronic device 201 in FIGS. 2A, 2B, and 2C and/or the electronic device 301 in FIGS. 3A, 3B, and 3C according to an embodiment of the disclosure.

In an embodiment, reference numeral 901 is a plan view illustrating an area of the cover display 250 controlled according to the bending angle of the electronic device 101, and reference numeral 903 is a plan view illustrating an area of the flexible display 250 controlled according to the bending angle of the electronic device 101.

In FIG. 9B, when the electronic device 201 or 301 is in the second stand state 402 or the fourth stand state 502, and when the bending angle (e.g., θ6) of the electronic device 201 or 301 is within a fifth angle range (e.g., greater than approximately 0 degrees and less than or equal to approximately 80 degrees), the electronic device 201 or 301 may control, under the control of a processor (e.g., the processor 120 in FIG. 1), visual information to be displayed in the edge area of the cover display 250.

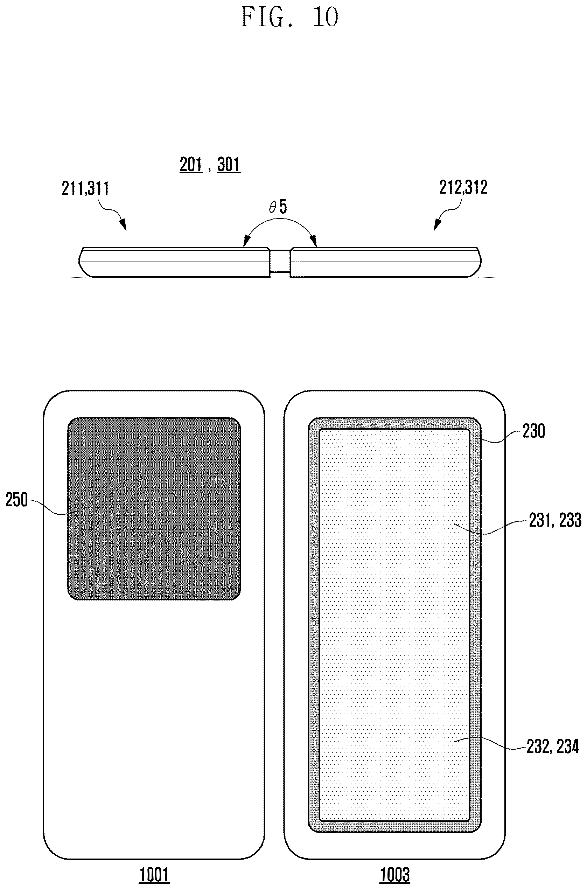

FIG. 10 illustrates a display control area according to the bending angle and stand state of the electronic device 201 in FIGS. 2A, 2B, and 2C and/or the electronic device 301 in FIGS. 3A, 3B, and 3C according to an embodiment of the disclosure.

In an embodiment, reference numeral 1001 is a plan view illustrating an area of the cover display 250 controlled according to the bending angle of the electronic device 101, and reference numeral 1003 is a plan view illustrating an area of the flexible display 250 controlled according to the bending angle of the electronic device 101.

In FIG. 10, when the electronic device 201 or 301 is in the first stand state 401 or the third stand state 501, and when the bending angle (e.g., 05) of the electronic device 201 or 301 is at a second angle (e.g., approximately 180 degrees) or within a seventh angle range (e.g., from approximately 130 degrees to approximately 180 degrees), the electronic device 201 or 301 may control, under the control of a processor (e.g., the processor 120 in FIG. 1), visual information to be displayed in the edge area of the flexible display 230. In this case, the cover display 250 may be in a standby state, an off state, and/or an always-on display (AOD) state.

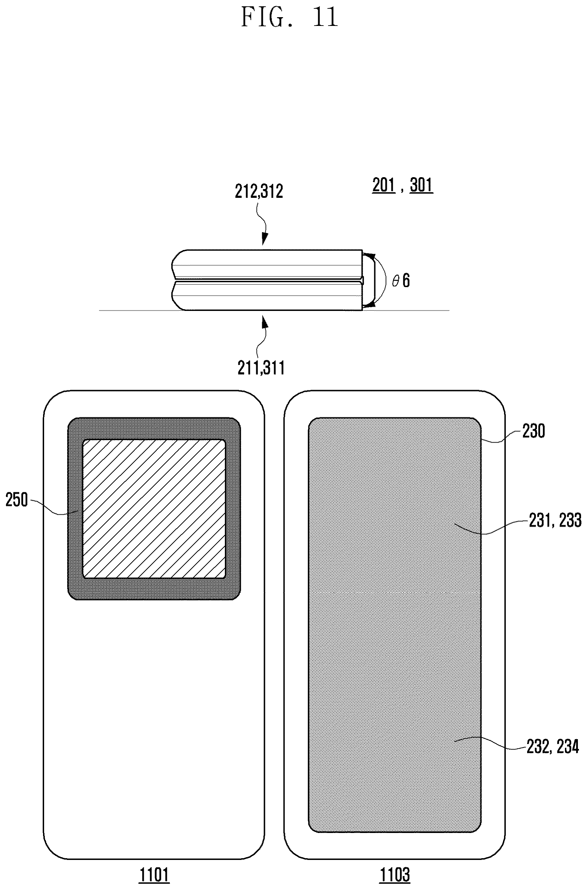

FIG. 11 illustrates a display control area according to the bending angle and stand state of the electronic device 201 in FIGS. 2A, 2B, and 2C and/or the electronic device 301 in FIGS. 3A, 3B, and 3C according to an embodiment of the disclosure.

In the embodiment, reference numeral 1101 is a plan view illustrating an area of the cover display 250 controlled according to the bending angle of the electronic device 101, and reference numeral 1103 is a plan view illustrating an area of the flexible display 250 controlled according to the bending angle of the electronic device 101.

In FIG. 11, when the bending angle (e.g., θ6) of the electronic device 201 or 301 is a first angle (e.g., approximately 0 degrees), the electronic device 101 may control, under the control of a processor (e.g., the processor 120 in FIG. 1), visual information to be displayed on the cover display 250. In this case, the flexible display 230 may be in a standby state and/or an off state.

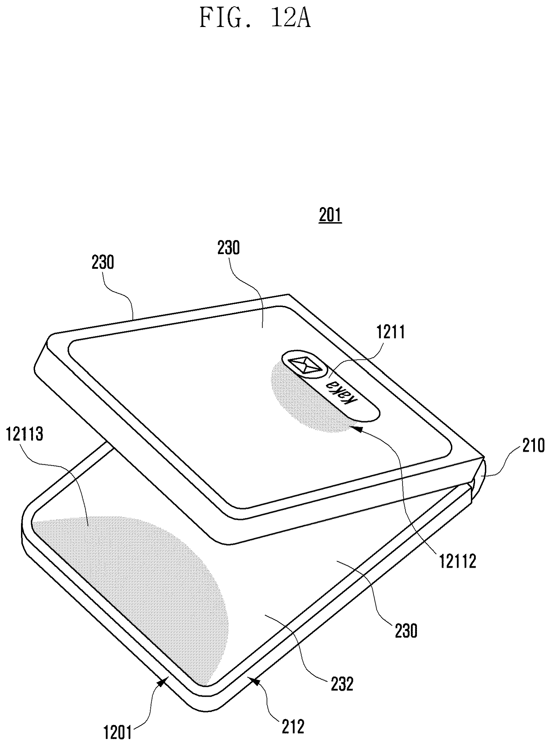

FIG. 12A illustrates the display control operation of the electronic device 201 in FIGS. 2A, 2B, and 2C according to an embodiment of the disclosure.

In an embodiment, FIG. 12A illustrates an operation of controlling the flexible display 230 and the cover display 250 of the electronic device 201when the electronic device 201 is in a first stand state (e.g., the first stand state 401 in FIG. 4Aa), and when the bending angle is within a first angle range (e.g., greater than 0 degrees and less than or equal to 30 degrees).

In an embodiment, the electronic device 201 may be in a state in which the second housing 212 faces the ground and the first housing 211 stands in the air.

In an embodiment, the electronic device 201 may display notification information 1211 on the cover display 250 and display first visual information 12112 having a specific brightness and/or specific color around the notification information 1211. The electronic device 201 may display second visual information 12113 having a specific brightness and/or specific color in the second area 232 adjacent to a first side surface 1201 of the second housing 212. The first side surface 1201 may be identical to a second edge (e.g., the second edge 2121 in FIG. 4B).

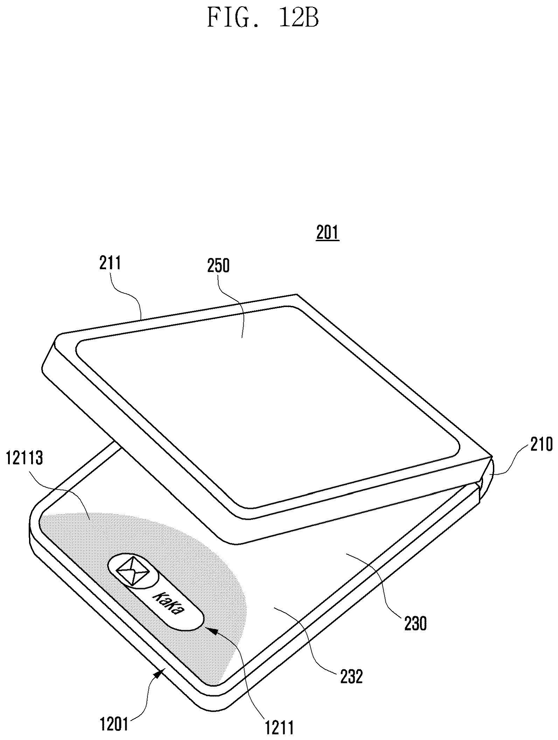

FIG. 12B illustrates the display control operation of the electronic device 201 in FIGS. 2A, 2B, and 2C according to an embodiment of the disclosure.

In FIGS. 12A and 12B, the first visual information 12112 and/or the second visual information 12113 may be produced based on an application for producing the notification information 1211 on the electronic device 201.

For example, the electronic device 201 may produce the first visual information 12112 and/or the second visual information 12113 displayed on the display (e.g., the flexible display 230 and/or the cover display 250) by using the color code or color of an icon being used by a running application.

In FIG. 12B, the electronic device 201 may display the notification information 1211 in the second area 232 and display the second visual information 12113 having a specific brightness and/or specific color around the notification information 1211.

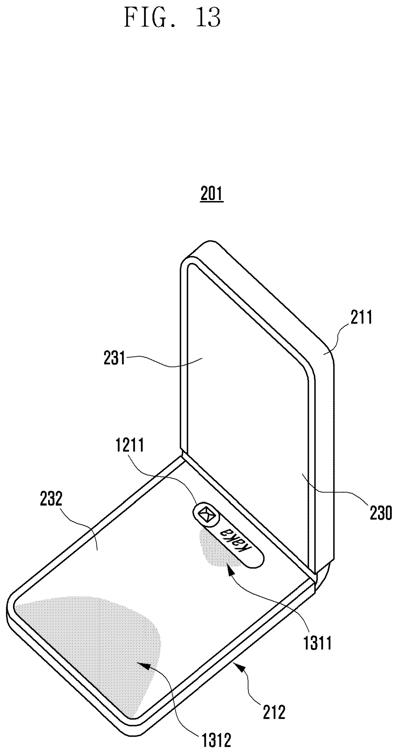

FIG. 13 illustrates the display control operation of the electronic device 201 in FIGS. 2A, 2B, and 2C according to an embodiment of the disclosure.

In FIG. 13, when the electronic device 201 is in a first stand state (e.g., the first stand state 401 in FIG. 4B), and when the bending angle is within a second angle range (e.g., greater than 30 degrees and less than or equal to 150 degrees), the electronic device 201 may control, under the control of a processor (e.g., the processor 120 in FIG. 1), visual information to be displayed on the flexible display 230.

In an embodiment, the electronic device 201 may be in a state in which the second housing 212 faces the ground and the first housing 211 stands in the air.

In FIG. 13, the electronic device 201 may display notification information 1311 in the second area 232 and display third visual information 13111 having a specific brightness and/or specific color around the notification information 1311. The electronic device 201 may display fourth visual information 13112 having a specific brightness and/or specific color in the second area 232.

In an embodiment, the third visual information 13111 and/or the fourth visual information 13112 may be produced based on an application for producing the notification information 1311 on the electronic device 101. For example, the electronic device 201 may produce the third visual information 13111 and/or the fourth visual information 13112 displayed on the display (e.g., the flexible display 230 and/or the cover display 250) by using the color code or color of an icon being used by a running application.

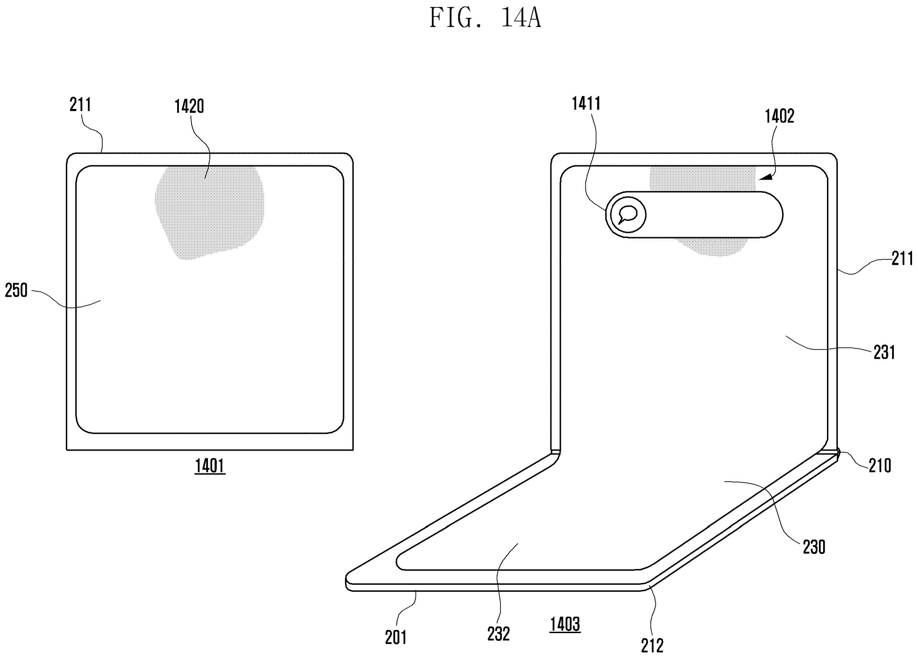

FIG. 14A illustrates the display control operation of the electronic device 201 in FIGS. 2A, 2B, and 2C according to an embodiment of the disclosure.

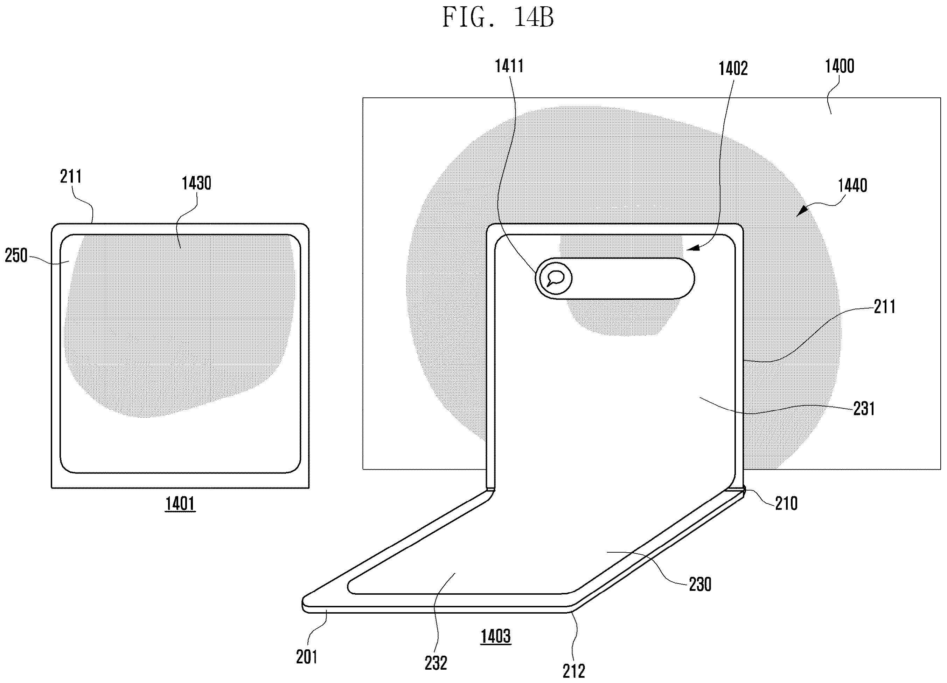

FIG. 14B illustrates the display control operation of the electronic device 201 in FIGS. 2A, 2B, and 2C according to an embodiment of the disclosure.

Unlike FIG. 14A, FIG. 14B illustrates that when a wall 1400 is present around the electronic device 201 and the electronic device 201 detects the wall 1400, the display intensity of visual information changes.

In an embodiment, reference numeral 1401 illustrates an area of the cover display 250 controlled by the electronic device 101, and reference numeral 1403 illustrates an area of the flexible display 250 controlled by the electronic device 101.

In an embodiment, the electronic device 201 may measure the distance between the electronic device 201 and an object to determine whether the electronic device 201 and the object (e.g., a wall or the ground) 1400 are within a predetermined distance. The electronic device 201 may measure the distance between the electronic device 201 and the object by using a proximity sensor (e.g., a time-of-flight (TOF) sensor).

In FIG. 14A, when the electronic device 201 is in a first stand state (e.g., the first stand state 401 in FIG. 4B) and when the bending angle of the electronic device 201 is within a second angle range (e.g., greater than 30 degrees and less than or equal to 150 degrees), the electronic device 201 may display, under the control of a processor (e.g., the processor 120 in FIG. 1), visual information 1402 and 1420 on the flexible display 230 and the cover display 250. The electronic device 201 may display the fifth visual information 1402 around notification information 1411 displayed in the first area 231, and display the sixth visual information 1420 on the cover display 250.

In FIG. 14B, when the electronic device 201 is in the first stand state 401, when the distance between the electronic device 201 and the object (e.g., a wall) 1400 is within a designated distance, and when the bending angle of the electronic device 201 is within a second angle range (e.g., greater than 30 degrees and less than or equal to 150 degrees), the electronic device 201, under the control of the processor 120, may display visual information 1402 and 1430 on the flexible display 230 and the cover display 250. The seventh visual information 1430 displayed on the cover display 250 may have a higher intensity than the sixth visual information 1420. The operation of increasing the display intensity of the visual information on the flexible display 230 and/or the cover display 250 may be an operation of controlling the saturation of a color displayed on the flexible display 230 and/or the cover display 250 to be increased and/or controlling the brightness of the flexible display 230 and/or the cover display 250 to be increased. The electronic device 201 may increase the display intensity of the visual information displayed on the cover display 250 when the wall 1400 around the electronic device 201 is detected. In this case, light generated by the visual information (e.g., the seventh visual information 1430) displayed on the cover display 250 may appear as reflected light 1440 on the wall 1400.

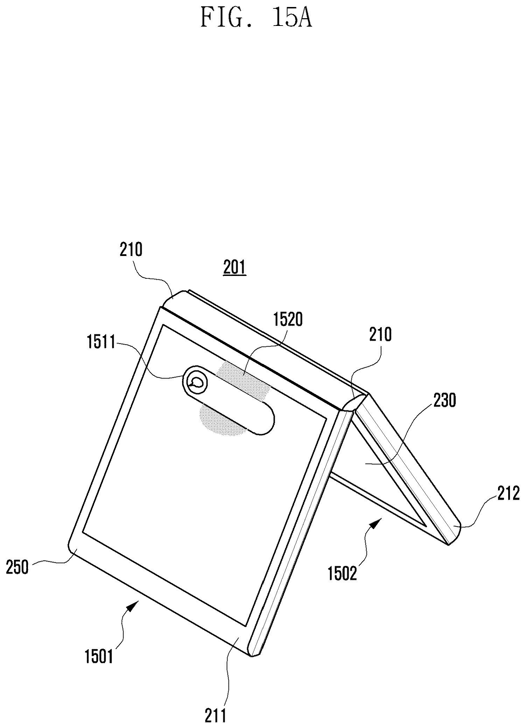

FIG. 15A illustrates the display control operation of the electronic device 201 in FIGS. 2A, 2B, and 2C according to an embodiment of the disclosure.

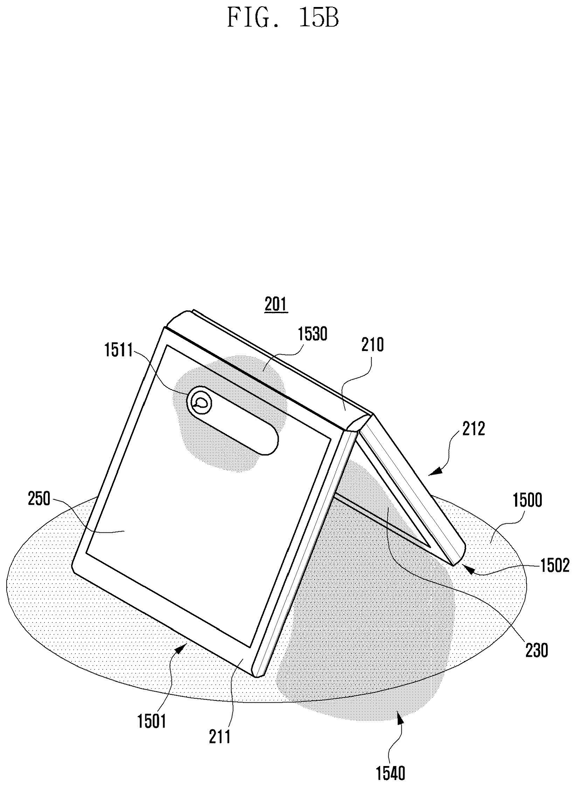

FIG. 15B illustrates the display control operation of the electronic device 201 in FIGS. 2A, 2B, and 2C according to an embodiment of the disclosure.

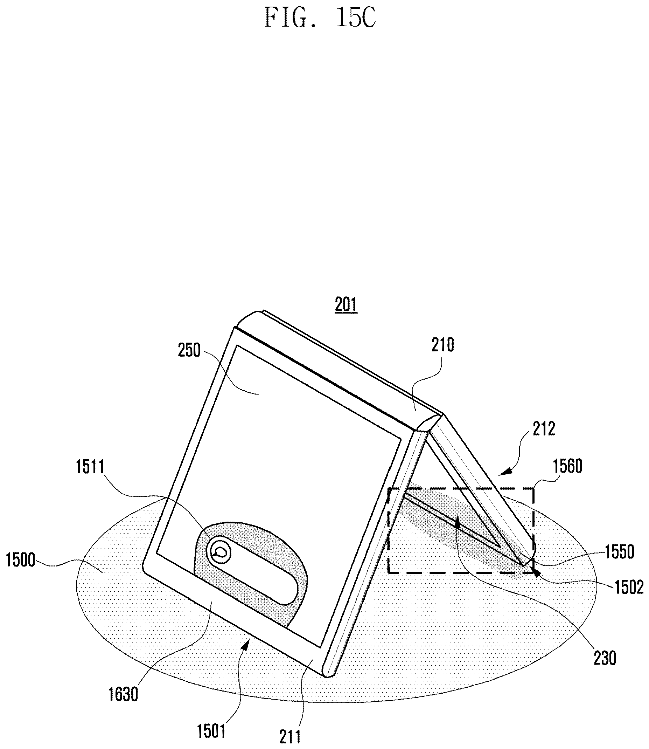

FIG. 15C illustrates the display control operation of the electronic device 201 in FIGS. 2A, 2B, and 2C according to an embodiment of the disclosure.

Unlike FIG. 15A, FIGS. 15B and 15C illustrates that, when a ground 1500 is present around the electronic device 201 and the electronic device 201 detects the ground 1500, the display intensity of visual information changes.

In FIGS. 15A, 15B, and 15B, when the electronic device 201 is in a second stand state (e.g., the second stand state 402 in FIG. 4B), an edge 1501 of the first housing 211 and an edge 1502 of the second housing 212 of the electronic device 201 may be in contact with the ground.

In FIG. 15A, when the electronic device 201 is in the second stand state (e.g., the second stand state 402 in FIG. 4B) and when the bending angle of the electronic device 201 is within a fifth angle range (e.g., greater than approximately 0 degrees and less than or equal to approximately 80 degrees), the electronic device 201, under the control of a processor (e.g., the processor 120 of the in FIG. 1), may control visual information to be displayed on the cover display 250.

In an embodiment, the electronic device 201 may display notification information 1511 on the cover display 250 and display eighth visual information 1520 around the notification information 1511.

In FIG. 15B, when the electronic device 201 is in the second stand state 402, when the distance between the electronic device 201 and an object (e.g., the ground or a wall) 1500 is within a designated distance, and when the bending angle of the electronic device 201 is within a fifth angle range.(e.g., greater than approximately 0 degrees and less than or equal to approximately 80 degrees), the electronic device 201, under the control of the processor 120, may display visual information 1530 and 1540 on the flexible display 230 and the cover display 250. Ninth visual information 1530 displayed around the notification information 1511 may have a higher display intensity than the eighth visual information 1520. Tenth visual information 1540 may be displayed on the flexible display 230. In this case, light generated by the visual information (e.g., the tenth visual information 1530) displayed on the flexible display 230 may appear as reflected light on the ground 1500.

In FIG. 15C, the electronic device 201 may change the display locations of visual information 1550 and 1560 by a user input. For example, when a do-not-disturb mode (e.g., DND mode) is configured by a user input, the electronic device 201 may position the display locations of the visual information 1550 and 1560 at the periphery rather than the center of the display.

In FIG. 15C, when the electronic device 201 is in the second stand state 402, when the distance between the electronic device 201 and an object (e.g., the ground or wall) 1500 is within a designated distance, and when the bending angle of the electronic device 201 is within the fifth angle range.(e.g., greater than approximately 0 degrees and less than or equal to approximately 80 degrees), the electronic device 201, under the control of the processor 120, may display the visual information 1550 and 1560 on the flexible display 230 and the cover display 250. The electronic device 201 may display notification information 1511 on the cover display 250, display eleventh visual information 550 around the notification information 1511, and display twelfth visual information 1560 on the flexible display 230. The notification information 1511, the eleventh visual information 1550 displayed around the notification information 1511, and the twelfth visual information 1560 may be displayed in an area of the display near the ground 1500.

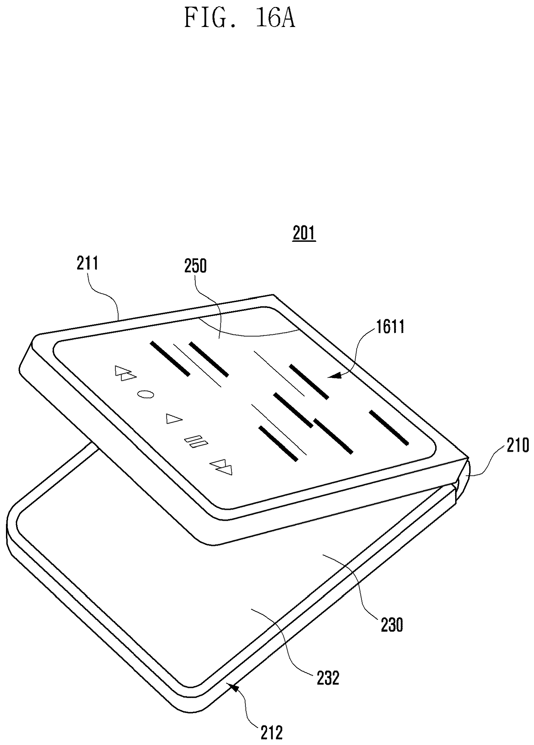

FIG. 16A illustrates the display control operation of the electronic device 201 in FIGS. 2A, 2B, and 2C according to an embodiment of the disclosure.

In an embodiment, FIG. 16A illustrates an operation of controlling the flexible display 230 and the cover display 250 of the electronic device 201 when the electronic device 201 is in a first stand state (e.g., the first stand state 401) in FIG. 4A) and when the bending angle is within a first angle range (e.g., greater than 0 degrees and less than or equal to 30 degrees). The electronic device 201 may be in a state in which the second housing 212 faces the ground and the first housing 211 stands in the air.

In an embodiment, the electronic device 201 may display an interface 1611 related to media being played on the cover display 250 as visual information.

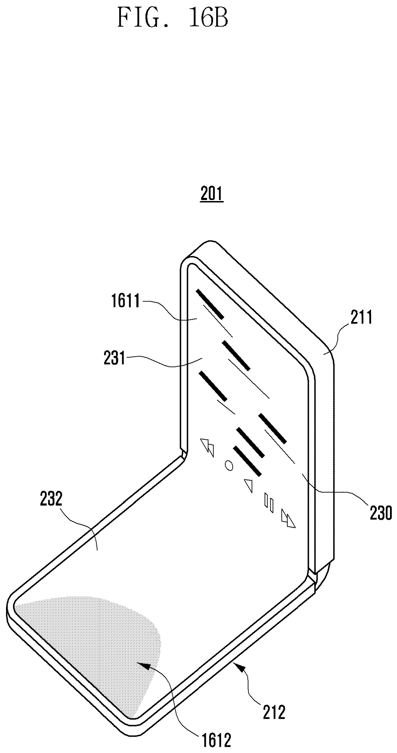

FIG. 16B illustrates the display control operation of the electronic device 201 in FIGS. 2A, 2B, and 2C according to an embodiment of the disclosure.

In FIG. 16B, when the electronic device 201 is in the first stand state 401 and when the bending angle is within a third angle range (e.g., an angle greater than approximately 80 degrees and less than approximately 110 degrees), the electronic device 201 may control, under the control of a processor (e.g., the processor 120 in FIG. 1), visual information to be displayed on the flexible display 230.

In an embodiment, the electronic device 201 may be in a state in which the second housing 212 faces the ground and the first housing 211 stands in the air.

In FIG. 16B, the electronic device 201 may display an interface 1611 related to media being played as visual information in the first area 231. The electronic device 201 may display visual information 1612 having a specific brightness and/or specific color in the second area 232.

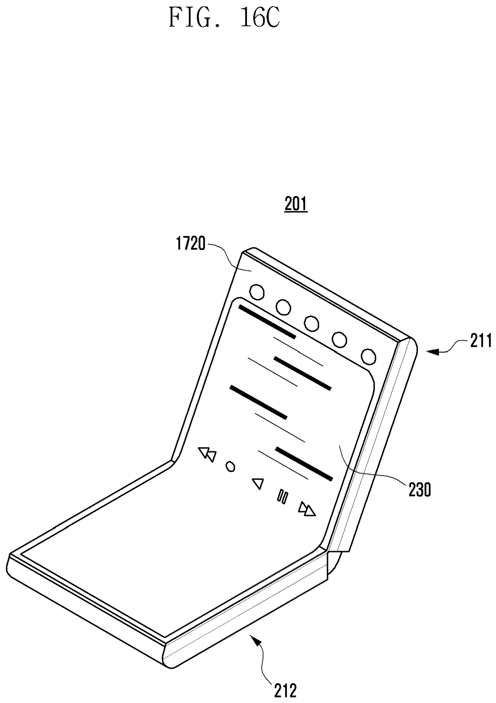

FIG. 16C illustrates the display control operation of the electronic device 201 in FIGS. 2A, 2B, and 2C according to an embodiment of the disclosure.

In FIG. 16C, when the electronic device 201 is in the first stand state 401 and when the bending angle is within a second angle range (e.g., greater than 30 degrees and less than or equal to 150 degrees), the electronic device 201, under the control of the processor 120, may control visual information to be displayed on the flexible display 230.

In an embodiment, the electronic device 201 may be in a state in which the second housing 212 faces the ground and the first housing 211 stands in the air.

In FIG. 16C, the electronic device 201 may display the interface 1611 related to media being played, as visual information, in the first area 231 and/or the second area.

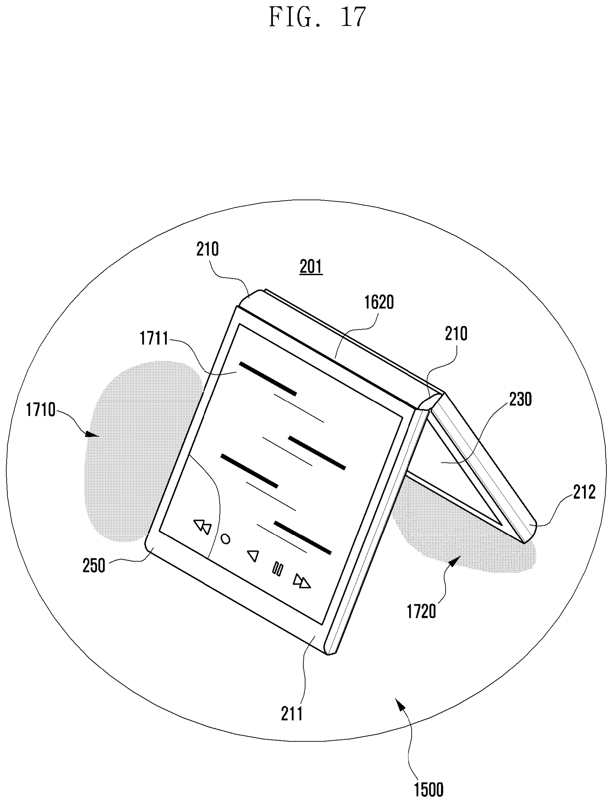

FIG. 17 illustrates the display control operation of the electronic device 201 in FIGS. 2A, 2B, and 2C according to an embodiment of the disclosure.

In FIG. 17, when the electronic device 201 is in a second stand state (e.g., the second stand state 402 in FIG. 4B), when the distance between the electronic device 201 and an object (e.g., the ground) 1500 is within a designated distance, and when the bending angle of the electronic device 201 is within a first angle range (e.g., greater than 0 degrees and less than or equal to 30 degrees), the electronic device 201 may display, under the control of a processor (e.g., the processor 120 in FIG. 1), an interface 1711 related to the media being played on the cover display 250. In this case, the electronic device 201 may control visual information to be displayed on the flexible display 230, and light generated by the visual information displayed based on the interface 1711 related to the media being played may appear as reflected light 1710 and 1720 on the ground.

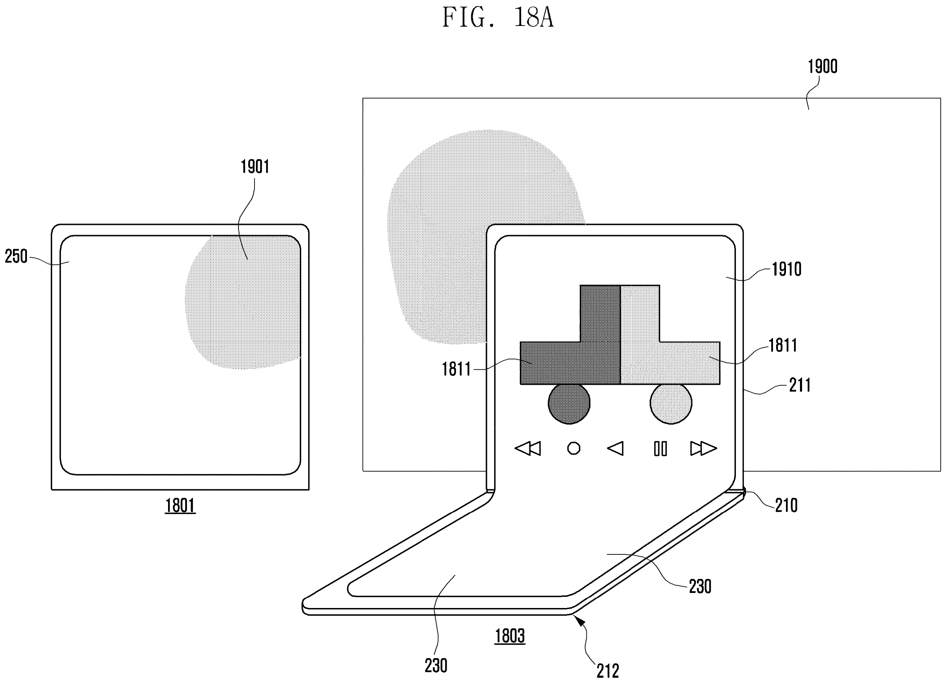

FIG. 18A illustrates the display control operation of the electronic device 201 according to FIG. 2A, 2B, and 2C according to an embodiment of the disclosure.

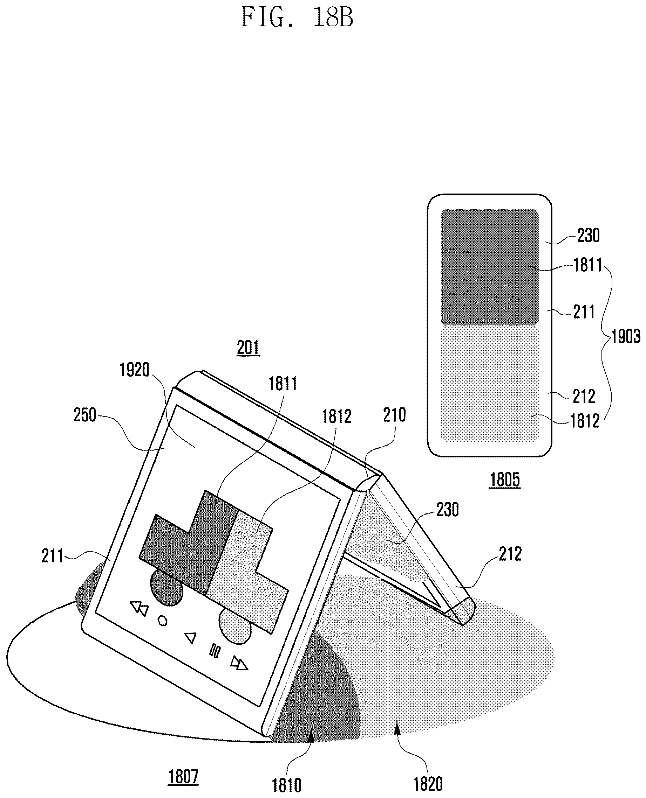

FIG. 18B illustrates the display control operation of the electronic device 201 shown in FIGS. 2A, 2B, and 2C according to an embodiment of the disclosure.

In FIG. 18A, the electronic device 201 may play media (e.g., video or music), and may display an interface 1910 related to the media in the first area 231.

In FIG. 18A, reference numeral 1801 illustrates an area of the cover display 250 controlled by the electronic device 101, and reference numeral 1803 illustrates that light displayed on the cover display 250 is reflected on a wall 1900.

In FIG. 18A, when the electronic device 201 is in a first stand state (e.g., the first stand state 401 in FIG. 4A), when the distance between the electronic device 201 and an object (e.g., a wall) 1900 is within a designated distance, and when the bending angle of the electronic device 201 is within a second angle range (e.g., greater than 30 degrees and less than or equal to 150 degrees), the electronic device 201, under the control of the processor 120, may display visual information 1901 on the flexible display 230 and/or the cover display 250.

The electronic device 201 may produce the visual information 1901 displayed on a display (e.g., the flexible display 230 and/or the cover display 250) by using the color code or color of a thumbnail or cover being used by the media (music or video). The electronic device 201 may produce the visual information 1901 by extracting the color or color code of the thumbnail or cover used by the media (music or video) being played on a pixel-by-pixel basis and using at least one color or color code having a high hue/saturation/brightness (HSB) average value.

In an embodiment, the electronic device 201, under the control of the processor 120, may control all or at least a portion of the cover display 250 to be displayed in a content-based color in conjunction with content displayed on the flexible display 230. The electronic device 101, under the control of the processor 120, may identify colors included in the content displayed on the flexible display 230. The electronic device 101, under the control of the processor 120, may identify a ranking based on the proportion of colors included in the content displayed on the flexible display 230. Based on the first-ranked color and/or colors within a designated ranking according to the ranking among the colors, the electronic device 101, under the control of the processor 120, may display all or at least a portion of the cover display 250 in a content-based color.

For example, in relation to the portion of colors in the content displayed on the flexible display 230, red 1811 may be 30%, blue 1812 may be 30%, and the remaining colors may be less than 30%. The electronic device 101, under the control of the processor 120, may assign the first rank to the red 1811, the second rank to the blue 1812, and the third rank to the remaining colors. The electronic device 101, under the control of the processor 120, may display all or at least a portion of the cover display 250 in the red 1811 and/or the blue 1812 as content-based colors.

In FIG. 18B, the electronic device 201 may play media (e.g., video or music) and display an interface 1920 related to the media on the cover display 250.

In FIG. 18B, reference numeral 1805 illustrates an area of the flexible display 230 controlled by the electronic device 101, and reference numeral 1807 illustrates that light displayed on the flexible display 230 is reflected onto the ground.

In FIG. 18B, when the electronic device 201 is in a second stand state (e.g., the second stand state 402 in FIG. 4B), when the electronic device 201 is in contact with an object (e.g., a wall), and when the bending angle of the electronic device 201 is within a first angle range (e.g., greater than 0 degrees and less than or equal to 30 degrees), the electronic device 201 may, under the control of the processor 120, display visual information on the flexible display 230. In this case, light generated by the visual information displayed on the flexible display 230 may appear as reflected light 1810 and 1820 on the ground.

The electronic device 101 may produce visual information 1903 displayed on the display (e.g., the flexible display 230 and/or the cover display 250) by using the color code or color of a thumbnail or a cover used by the media (music or video). The visual information 1903 may be produced by extracting the color or color code of the thumbnail or cover used by the media (music or video) being played on a pixel-by-pixel basis and using at least one color or color code having a high hue/saturation/brightness (HSB) average value.

In an embodiment, the electronic device 201, under the control of the processor 120, may control all or at least a portion of the flexible display 230 to be displayed in a content-based color in conjunction with content displayed on the cover display 250. The electronic device 101, under the control of the processor 120, may identify colors included in the content displayed on the cover display 250. The electronic device 101, under the control of the processor 120, may identify a ranking based on the proportion of colors included in the content displayed on the cover display 250. Based on the first-ranked color and/or colors within a designated ranking according to the ranking among the colors, the electronic device 101, under the control of the processor 120, may display all or at least a portion of the flexible display 230 to be displayed in a content-based color.

For example, in relation to the proportion of colors in the content displayed on the cover display 250, red 1811 may be 30%, blue 1812 may be 30%, and the remaining colors may be less than 30%. The electronic device 101, under the control of the processor 120, may assign the first rank to the red 811, the second rank to the blue 1812, and the third rank to the remaining colors. The electronic device 101, under the control of the processor 120, may display all or at least a portion of the flexible display 230 in the red 1811 and/or the blue 1812 as content-based colors.

In an embodiment, an electronic device (e.g., the electronic device 101 in FIG. 1, the electronic device 201 in FIG. 2A, or the electronic device 301 in FIG. 3A) may include a foldable housing including a first housing (e.g., the first housing 211 or the second housing 311) and a second housing (e.g., the second housing 212 or the fourth housing 312) coupled to be folded or unfolded, a memory 130, a processor 120, at least one sensor, a flexible display 230 disposed on at least a portion of a first surface of the foldable housing and capable of being folded or unfolded, and a cover display 250 disposed on at least a portion of a second surface of the first housing (e.g., the first housing 211 or the second housing 311).

In an embodiment, instructions stored in the memory 130, when executed by the processor 120, may cause the electronic device (e.g., the electronic device 101 in FIG. 1, the electronic device 201 in FIG. 2A, or the electronic device 301 in FIG. 3A) to determine a bending angle of the foldable housing by using the at least one sensor, determine a stand state of the foldable housing by using the at least one sensor, identify a display on which visual information is to be displayed, based on the bending angle and the stand state, and control the display based on the visual information.

In an embodiment, the instructions stored in the memory 130, when executed by the processor 120, may cause the electronic device (e.g., the electronic device 101 in FIG. 1, the electronic device 201 in FIG. 2A, or the electronic device 301 in FIG. 3A) to determine that the foldable housing is in a flex state when the bending angle is determined to be within a specific angle range.

In an embodiment, the instructions stored in the memory 130, when executed by the processor 120, may cause the electronic device (e.g., the electronic device 101 in FIG. 1, the electronic device 201 in FIG. 2A, or the electronic device 301 in FIG. 3A) to determine that the electronic device is in a first stand state (e.g., the first stand state 401 or the third stand state 501) when a rear surface of the first housing (e.g., the first housing 211 or the second housing 311) or a rear surface of the second housing (e.g., the second housing 212 or the fourth housing 312) is determined to face a ground in the flex state.

In an embodiment, the instructions stored in the memory 130, when executed by the processor 120, may cause the electronic device (e.g., the electronic device 101 in FIG. 1, the electronic device 201 in FIG. 2A, or the electronic device 301 in FIG. 3A) to determine that the electronic device is in a second stand state (e.g., the second stand state 402 or the fourth stand state 502) when a first edge of the first housing (e.g., the first housing 211 or the second housing 311) and/or a second edge of the second housing (e.g., the second housing 212 or the fourth housing 312) is determined to face the ground in the flex state.

In an embodiment, the instructions stored in the memory 130, when executed by the processor 120, may cause the electronic device (e.g., the electronic device 101 in FIG. 1, the electronic device 201 in FIG. 2A, or the electronic device 301 in FIG. 3A) to determine information about a distance between the electronic device (e.g., the electronic device 101 in FIG. 1, the electronic device 201 in FIG. 2A, or the electronic device 301 in FIG. 3A) and an object by using the at least one sensor.

In an embodiment, the instructions stored in the memory 130, when executed by the processor 120, may cause the electronic device (e.g., the electronic device 101 in FIG. 1, the electronic device 201 in FIG. 2A, or the electronic device 301 in FIG. 3A) to control the visual information to be displayed on the flexible display 230 and the cover display 250 when the electronic device (e.g., the electronic device 101 in FIG. 1, the electronic device 201 in FIG. 2A, or the electronic device 301 in FIG. 3A) is in the first stand state (e.g., the first stand state 401 or the third stand state 501) and when the bending angle is within a first angle range (e.g., greater than approximately 0 degrees and less than or equal to approximately 30 degrees), and control the visual information to be displayed on the flexible display 230 when the electronic device (e.g., the electronic device 101 in FIG. 1, the electronic device 201 in FIG. 2A, or the electronic device 301 in FIG. 3A) is in the first stand state (e.g., the first stand state 401 or the third stand state 501) and when the bending angle is within a second angle range (e.g., greater than approximately 30 degrees and less than or equal to approximately 150 degrees).

In an embodiment, the instructions stored in the memory 130, when executed by the processor 120, may cause the electronic device (e.g., the electronic device 101 in FIG. 1, the electronic device 201 in FIG. 2A, or the electronic device 301 in FIG. 3A) to control an intensity of the visual information to be increased when the electronic device (e.g., the electronic device 101 in FIG. 1, the electronic device 201 in FIG. 2A, or the electronic device 301 in FIG. 3A) and the object are within a predetermined distance.

In an embodiment, the instructions stored in the memory 130, when executed by the processor 120, may cause the electronic device (e.g., the electronic device 101 in FIG. 1, the electronic device 201 in FIG. 2A, or the electronic device 301 in FIG. 3A) to control the visual information to be displayed on the cover display 250 when the electronic device (e.g., the electronic device 101 in FIG. 1, the electronic device 201 in FIG. 2A, or the electronic device 301 in FIG. 3A) is in the second stand state (e.g., the second stand state 402 or the fourth stand state 502) and when the bending angle is within a first angle range (e.g., greater than approximately 0 degrees and less than or equal to approximately 30 degrees), and control the visual information to be displayed on the flexible display 230 and the cover display 250 when the electronic device (e.g., the electronic device 101 in FIG. 1, the electronic device 201 in FIG. 2A, or the electronic device 301 in FIG. 3A) is in the second stand state (e.g., the second stand state 402 or the fourth stand state 502) and when the bending angle is within a second angle range (e.g., greater than approximately 30 degrees and less than or equal to approximately 150 degrees).

In an embodiment, the instructions stored in the memory 130, when executed by the processor 120, may cause the electronic device (e.g., the electronic device 101 in FIG. 1, the electronic device 201 in FIG. 2A, or the electronic device 301 in FIG. 3A) to control an intensity of visual information to be increased when the electronic device (e.g., the electronic device 101 in FIG. 1, the electronic device 201 in FIG. 2A, or the electronic device 301 in FIG. 3A) and the object are within a predetermined distance.

In an embodiment, the visual information may include a visual effect and/or an object and may be produced using a color code or a color of a running application.

In an embodiment, a method for controlling a display of an electronic device (e.g., the electronic device 101 in FIG. 1, the electronic device 201 in FIG. 2A, or the electronic device 301 in FIG. 3A) including a foldable housing so as to be capable of being folded or unfolded may include an operation of determining a bending angle of the foldable housing by using at least one sensor, an operation of determining a stand state of the foldable housing by using the at least one sensor, an operation of identifying a display on which visual information is to be displayed, based on the bending angle and stand state, and an operation of controlling the display based on the visual information.

In an embodiment, the method for controlling the display of the electronic device (e.g., the electronic device 101 in FIG. 1, the electronic device 201 in FIG. 2A, or the electronic device 301 in FIG. 3A) may include an operation of determining that the foldable housing is in a flex state when the bending angle is determined to be within a specific angle range.

In an embodiment, the method for controlling the display of the electronic device (e.g., the electronic device 101 in FIG. 1, the electronic device 201 in FIG. 2A, or the electronic device 301 in FIG. 3A) may include an operation of determining that the electronic device is in a first stand state (e.g., the first stand state 401 or the third stand state 501) when a rear surface of a first housing (e.g., the first housing 211 or the second housing 311) or a rear surface of a second housing (e.g., the second housing 212 or the fourth housing 312) is determined to face a ground in the flex state.

In an embodiment, the method for controlling the display of the electronic device (e.g., the electronic device 101 in FIG. 1, the electronic device 201 in FIG. 2A, or the electronic device 301 in FIG. 3A) may include an operation of determining that the electronic device is in a second stand state (e.g., the second stand state 402 or the fourth stand state 502) when a first edge of the first housing (e.g., the first housing 211 or the second housing 311) and/or a second edge of the second housing (e.g., the second housing 212 or the fourth housing 312) is determined to face the ground in the flex state.

In an embodiment, the method for controlling the display of the electronic device (e.g., the electronic device 101 in FIG. 1, the electronic device 201 in FIG. 2A, or the electronic device 301 in FIG. 3A) may include an operation of determining information about a distance between the electronic device (e.g., the electronic device 101 in FIG. 1, the electronic device 201 in FIG. 2A, or the electronic device 301 in FIG. 3A) and an object by using the at least one sensor.

In an embodiment, the method for controlling the display of the electronic device (e.g., the electronic device 101 in FIG. 1, the electronic device 201 in FIG. 2A, or the electronic device 301 FIG. 3A) may include an operation of controlling the visual information to be displayed on a flexible display 230 and a cover display 250 when the electronic device (e.g., the electronic device 101 in FIG. 1, the electronic device 201 in FIG. 2A, or the electronic device 301 in FIG. 3A) is in the first stand state (e.g., the first stand state 401 or the third stand state 501) and when the bending angle is within a first angle range (e.g., greater than approximately 0 degrees and less than or equal to approximately 30 degrees), and an operation of controlling the visual information to be displayed on the flexible display 230 when the electronic device (e.g., the electronic device 101 in FIG. 1, the electronic device 201 in FIG. 2A, or the electronic device 301 in FIG. 3A) is in the first stand state (e.g., the first stand state 401 or the third stand state 501) and when the bending angle is within a second angle range (e.g., greater than approximately 30 degrees and less than or equal to approximately 150 degrees).

In an embodiment, the method for controlling the display of the electronic device (e.g., the electronic device 101 in FIG. 1, the electronic device 201 in FIG. 2A, or the electronic device 301 in FIG. 3A) may include an operation of controlling an intensity of the visual information to be increased when the electronic device (e.g., the electronic device 101 in FIG. 1, the electronic device 201 in FIG. 2A, or the electronic device 301 in FIG. 3A) and the object are within a predetermined distance.

In an embodiment, the method for controlling the display of the electronic device (e.g., the electronic device 101 in FIG. 1, the electronic device 201 in FIG. 2A, or the electronic device 301 in FIG. 3A) may include an operation of controlling the visual information to be displayed on the cover display 250 when the electronic device (e.g., the electronic device 101 in FIG. 1, the electronic device 201 in FIG. 2A, or the electronic device 301 in FIG. 3A) is in the second stand state (e.g., the second stand state 402 or the fourth stand state 502) and when the bending angle is within a first angle range (e.g., greater than approximately 0 degrees and less than or equal to approximately 30 degrees), and an operation of controlling the visual information to be displayed on the flexible display 230 and the cover display 250 when the electronic device (e.g., the electronic device 101 in FIG. 1, the electronic device 201 in FIG. 2A, or the electronic device 301 in FIG. 3A) is in the second stand state (e.g., the second stand state 402 or the fourth stand state 502) and when the bending angle is within a second angle range (e.g., greater than approximately 30 degrees and less than or equal to approximately 150 degrees).

In an embodiment, the method for controlling the display of the electronic device (e.g., the electronic device 101 in FIG. 1, the electronic device 201 in FIG. 2A, or the electronic device 301 in FIG. 3A) may include an operation of controlling the intensity of the visual information to be increased when the electronic device (e.g., the electronic device 101 in FIG. 1, the electronic device 201 in FIG. 2A, or the electronic device 301 in FIG. 3A) and the object are within a predetermined distance.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a foldable housing comprising a first housing and a second housing coupled to be foldable or unfoldable with respect to each other ;
a memory;
a processor;
at least one sensor;
a flexible display disposed on at least a portion of a first surface of the foldable housing to be foldable or unfoldable; and
a cover display disposed on at least a portion of a second surface of the first housing,
wherein instructions stored in the memory, when executed by the processor, cause the electronic device to:
determine a bending angle of the foldable housing by using the at least one sensor;
determine a stand state of the foldable housing by using the at least one sensor;
based on the bending angle and the stand state, identify a display on which visual information is to be displayed; and
control the display, based on the visual information.

2. The electronic device of claim 1, wherein the instructions stored in the memory, when executed by the processor, cause the electronic device to:
in case that the bending angle is determined to be within a specific angle range, determine that the foldable housing is in a flex state;
in case that a rear surface of the first housing or a rear surface of the second housing is determined to face a ground in the flex state, determine that the electronic device is in a first stand state; and
determine information about a distance between the electronic device and an object by using the at least one sensor.

3. The electronic device of claim 2, wherein, the instructions stored in the memory, when executed by the processor, cause the electronic device to:
in case that the electronic device is in the first stand state and the bending angle is within a first angle range, control the visual information to be displayed on the flexible display and the cover display; and
in case that the electronic device is in the first stand state and the bending angle is within a second angle range, control the visual information to be displayed on the flexible display.

4. The electronic device of claim 3, wherein the instructions stored in the memory, when executed by the processor, cause the electronic device to, in case that the electronic device and the object are within a predetermined distance, control an intensity of the visual information to be increased.

5. The electronic device of claim 2, wherein the instructions stored in the memory, when executed by the processor, cause the electronic device to:
in case that the electronic device is in the second stand state and the bending angle is within a first angle range, control the visual information to be displayed on the cover display; and
in case that the electronic device is in the second stand state and the bending angle is within a second angle range, control the visual information to be displayed on the flexible display and the cover display.

6. The electronic device of claim 5, wherein the instructions stored in the memory, when executed by the processor, cause the electronic device to, in case that the electronic device and the object are within a predetermined distance, control an intensity of visual information to be increased.

7. The electronic device of claim 1, wherein the visual information comprises a visual effect and/or an object, and is produced using a color code or a color of the running application.

8. A method for controlling a display of an electronic device comprising a foldable housing that is foldable or unfoldable, the method comprising:
determining a bending angle of the foldable housing by using at least one sensor;
determining a stand state of the foldable housing by using the at least one sensor;
based on the bending angle and stand state, identifying a display on which visual information is to be displayed; and
controlling the display, based on the visual information.

9. The method of claim 8, comprising:
in case that the bending angle is determined to be within a specific angle range, determining that the foldable housing is in a flex state;
in case that a rear surface of the first housing or a rear surface of the second housing is determined to face a ground in the flex state, determining that the electronic device is in a first stand state;
in case that a first edge of the first housing and/or a second edge of the second housing is determined to face the ground in the flex state, determining that the electronic device is in a second stand state; and
determining information about a distance between the electronic device and an object by using the at least one sensor.

10. The method of claim 9, comprising:
in case that the electronic device is in the first stand state and the bending angle is within a first angle range, controlling the visual information to be displayed on a flexible display and a cover display; and
in case that the electronic device is in the first stand state and the bending angle is within a second angle range, controlling the visual information to be displayed on the flexible display.

11. The method of claim 10, comprising, in case that the electronic device and the object are within a predetermined distance, controlling an intensity of the visual information to be increased.

12. The method of claim 9, comprising:
in case that the electronic device is in the second stand state and the bending angle is within a first angle range, controlling the visual information to be displayed on a cover display; and
in case that the electronic device is in the second stand state and the bending angle is within a second angle range, controlling the visual information to be displayed on a flexible display and the cover display.

13. The method of claim 12, comprising, in case that the electronic device and the object are within a predetermined distance, controlling an intensity of the visual information to be increased.

14. The method of claim 8, wherein the visual information comprises a visual effect and/or an object, and is produced using a color code or a color of the running application.

15. An electronic device-readable recording medium storing instructions, wherein the instructions, when executed by an electronic device, cause the electronic device to perform:
determining a bending angle of the foldable housing by using at least one sensor;
determining a stand state of the foldable housing by using the at least one sensor;
based on the bending angle and the stand state, identifying a display on which visual information is to be displayed; and
controlling the display, based on the visual information.
